# EUROPÄISCHE PATENTSCHRIFT

(11) **EP 3 253 611 B1**
(45) Veröffentlichungstag und Bekanntmachung des Hinweises auf die Patenterteilung: **22.09.2021**
(21) Anmeldenummer: 16702074.2
(22) Anmeldetag: 27.01.2016
(51) Int. Cl.: B60L 53/64

(54) **VERFAHREN UND SYSTEM ZUR ERFASSUNG VON PLANUNGSPARAMETERN ZUM AUTOMATISCHEN LADEN EINES ELEKTRISCHEN ENERGIESPEICHERS IN EINEM FAHRZEUG**
METHOD AND SYSTEM FOR DETERMINING SCHEDULING PARAMETERS OF THE AUTOMATIC CHARGE OF AN ELECTRIC STORAGE IN A VEHICLE
PROCÉDÉ ET SYSTÈME DE DÉTECTION DE PARAMÈTRES DE PLANIFICATION POUR CHARGER AUTOMATIQUEMENT UN ACCUMULATEUR D'ÉNERGIE ÉLECTRIQUE DANS UN VÉHICULE

(30) Priorität: 04.02.2015 DE 102015201895
(43) Veröffentlichungstag der Anmeldung: 13.12.2017
(73) Patentinhaber: Volkswagen Aktiengesellschaft, 38440 Wolfsburg (DE)
(72) Erfinder: BREUEL, Matthias, 38440 Wolfsburg (DE); REINSCHLÜSSEL, Anke, 28844 Weyhe (DE)
(86) Internationale Anmeldenummer: PCT/EP2016/051683
(87) Internationale Veröffentlichungsnummer: WO 2016/124462

(56) Entgegenhaltungen:
- DE-A1-102012 007 126
- JP-A- 2011 166 870
- US-A1- 2013 274 972

## Beschreibung

Die vorliegende Erfindung betrifft ein Verfahren zur Erfassung von einstellbaren Planungsparametern für die Erzeugung eines Zeitplans zum automatischen Laden eines elektrischen Energiespeichers in einem Fahrzeug. Ferner betrifft die Erfindung ein System zur Erfassung von einstellbaren Planungsparametern für die Erzeugung eines Zeitplans zum automatischen Laden eines elektrischen Energiespeichers in einem Fahrzeug.

Für den Betrieb von Fahrzeugen, die über einen elektrischen Antrieb verfügen, ist die Möglichkeit entscheidend, den Energieinhalt des elektrischen Energiespeichers zeitgenau planen zu können. Dies ist umso mehr von Bedeutung, da das Laden eines elektrischen Energiespeichers typischerweise lange Zeit benötigt. Elektrisch angetriebene Fahrzeuge werden daher zum Beispiel häufig über Nacht an eine Ladestation angeschlossen. Für den Ladevorgang steht dann die Zeit bis zum geplanten Abfahrtszeitpunkt, etwa am nächsten Morgen, zur Verfügung. Der Ladevorgang kann in diesem Zeitraum flexibel gestaltet werden, um beispielsweise den Ladestrom niedrig zu halten, was die Lebensdauer der Batterie verlängert, oder um kostengünstige Nachtstromzeiträume zu nutzen, in denen elektrische Energie kostengünstiger aus dem Versorgungsnetz entnommen werden kann. Mit fortschreitender Umstellung auf regenerative Energieerzeugung wird die intelligente Steuerung der Auslastung der Energieversorgungsnetze weiter an Bedeutung gewinnen.

Um zu einem bestimmten Zeitpunkt einen bestimmten Energieinhalt des elektrischen Energiespeichers bereitstellen zu können, muss ein Zeitplan erzeugt werden, durch den der zeitliche Ablauf des Ladevorgangs festgelegt ist. Bei der Erzeugung dieses Zeitplans muss eine Vielzahl von Planungsparametern berücksichtigt werden, was die Planung des Ladevorgangs zu einer komplexen Aufgabe macht. Zu den Planungsparametern gehören etwa die geplante Abfahrtszeit, der gewünschte Energieinhalt des Energiespeichers, der früheste mögliche Beginn des Ladevorgangs, Zeiträume, in denen die Energieentnahme aus dem Versorgungsnetz besonders kostengünstig ist, und der zur Verfügung stehende Ladestrom.

Für den Benutzer des Fahrzeugs ist es daher von großer Bedeutung, dass die Planungsparameter des Zeitplans vollständig und leicht erfassbar dargestellt werden, um den Zeitplan intuitiv zu verstehen und die Konsequenzen einer Änderung von Planungsparametern unmittelbar abschätzen zu können. Ferner muss es zur einfachen Bedienung des Fahrzeugs möglich sein, die Planungsparameter schnell und einfach zu verändern, sodass zum Beispiel die geplante Abfahrtszeit leicht verschoben werden kann oder ein anderer Zeitpunkt zum Starten des Ladevorgangs gewählt werden kann.

Das in der US 2013 02 74 972 A1 beschriebene Verfahren und System erlaubt, den Zeitplan für das Laden eines elektrischen Energiespeichers und/oder Klimatisieren eines Fahrzeugs einmalig zu verändern. Zu diesem Zweck gibt der Benutzer eine neue Abfahrtszeit ein. Die Zeiten für das Laden und Klimatisieren werden automatisch neu erzeugt und ausgeführt.

Bei dem in der DE 10 2012 204 413 A1 beschriebenen Verfahren und System zum Steuern des Energieinhalts einer Traktionsbatterie wird die Möglichkeit ermittelt, die Batterie vor der nächsten Fahrt zu entladen und bis zum nächsten Fahrtbeginn wieder bis zu einem definierten Ladezustand aufzuladen. Dabei kann die Belastung es Stromnetzes beim Laden des Fahrzeugs minimiert werden, indem Zeiten geringer Auslastung für das Aufladen gewählt werden.

Die DE 10 2012 007 126 A1 beschreibt ein Verfahren und System zum Steuern des Aufladevorgangs eines elektrischen Energiespeichers in einem Fahrzeug. Dabei wird der Energieinhalt des Energiespeichers erfasst und es werden Benutzereigaben erfasst, anhand derer mehrere potentielle Aufladevorgänge berechnet und visualisiert werden. Dabei können Zeiträume mit geringeren Energiekosten bevorzugt werden. Der Benutzer kann einen der Aufladevorgänge auswählen. Dabei können die Kosten für das Aufladen zu bestimmten Zeiten berücksichtigt werden. Die Parameter können durch Manipulieren von Objekten in der Visualisierung der möglichen Aufladevorgänge verändert werden.

Die DE 10 2012 007126 A1 beschreibt ein Verfahren zum Steuern des Aufladevorgangs eines elektrischen Energiespeichers. Anhand von Benutzereingaben können Randbedingungen für den Aufladevorgang definiert werden und es werden verschiedene mögliche Aufladevorgänge berechnet, wobei veränderliche Energiekosten berücksichtigt werden.

Schließlich beschreibt die JP 2011 166870 A eine Aufladevorrichtung, bei der ein Aufladevorgang geplant wird und Vorgaben eines Benutzers berücksichtigt werden. Insbesondere kann ein Zeitpunkt für das gewünschte Ende des Aufladens vorgegeben werden.

Als nachteilig hat es sich bei den bekannten Lösungen ergeben, dass die verschiedenen für die Erzeugung des Zeitplans relevanten Planungsparameter nicht intuitiv und schnell genug eingegeben werden können.

Der vorliegenden Erfindung liegt die Aufgabe zugrunde, ein Verfahren und ein System der eingangs genannten Art zur Verfügung zu stellen, die dem Benutzer eine besonders schnelle und intuitive Erfassung und Angabe der relevanten Planungsparameter ermöglichen. Dabei sollen dem Benutzer insbesondere sämtliche relevanten Planungsparameter bereitgestellt werden können, sodass er sie schnell und intuitiv erfassen und eingeben kann.

Erfindungsgemäß wird diese Aufgabe durch ein Verfahren mit den Merkmalen des Anspruchs 1 und ein System mit den Merkmalen des Anspruchs 8 gelöst. Vorteilhafte Ausgestaltungen und Weiterbildungen ergeben sich aus den abhängigen Ansprüchen.

Bei dem erfindungsgemäßen Verfahren sind zumindest zwei Lademodi für den Energiespeicher definiert, nämlich ein Sofortlademodus, bei dem der Ladevorgang sofort nach dem Verbinden des Energiespeichers mit einer Ladeeinrichtung beginnt, und ein Programmlademodus, bei dem der Beginn des Ladevorgangs durch den Zeitplan bestimmt wird. Daten über den Energieinhalt des Energiespeichers und einen von einer Ladeeinrichtung bereitstellbaren Ladestrom werden erfasst. Es werden Graphikdaten einer graphischen Benutzeroberfläche mit mehreren graphischen Objekten erzeugt und gleichzeitig angezeigt. Dabei umfasst ein erstes graphisches Objekt ein für alle Lademodi des Energiespeichers übergreifendes Graphikelement, welches eine Zeitskala darstellt und an dem weitere graphische Objekte angeordnet sind. Ein zweites graphisches Objekt ist dem Anfangs- und Endzeitpunkt des geplanten Ladevorgangs zugeordnet und ein drittes graphisches Objekt ist dem ein Ladestrom zugeordnet. Ferner werden einstellbare Planungsparameter als Benutzereingaben zu dem automatischen Laden des elektrischen Energiespeichers erfasst, wobei einstellbare Planungsparameter, die graphischen Objekten zugeordnet sind, werden durch eine Bedienhandlung mittels der graphischen Benutzeroberfläche direkt verändert werden. Anhand der erfassten Daten und der einstellbaren Planungsparameter wird der Zeitplan zum automatischen Laden des Energiespeichers erzeugt, wobei ein spätester Verbindungszeitpunkt bestimmt wird, zu dem das Fahrzeug mit einer Ladeeinrichtung verbunden werden muss, um einen Ziel-Energieinhalt bis zum geplanten Endzeitpunkt zu erreichen, ein Erinnerungszeitpunkt bestimmt wird und eine Erinnerungsmeldung ausgegeben wird, wenn bei Erreichen des Erinnerungszeitpunkts das Fahrzeug nicht mit einer Ladeeinrichtung verbunden ist.

Bei dem erfindungsgemäßen Verfahren wird also danach unterschieden, ob der Energiespeicher des Fahrzeugs sofort nach dem Verbinden mit einer Ladeeinrichtung geladen werden soll (Sofortlademodus) oder ob der Ladevorgang mittels einer Timerfunktion programmiert werden soll (Programmlademodus). In diesen beiden Lademodi sind natürlicherweise verschiedene Planungsparameter zur Planung und Steuerung des Ladevorgangs erforderlich. Sie müssen dem Benutzer angezeigt werden und müssen an seine Bedürfnisse anpassbar sein.

Zur Ausgabe der Benutzeroberfläche erzeugt eine Steuereinheit Graphikdaten und überträgt diese an eine Ausgabeeinheit zur Anzeige. Hat der Benutzer zu diesem Zeitpunkt noch keine Eingabe vorgenommen, so kann beispielsweise ein Zeitplan auf der Grundlage der zuletzt eingegebenen Daten angezeigt werden oder das System kann Ausgangswerte erzeugen, die etwa auf der aktuellen Uhrzeit basieren.

Als Ausgabeeinheit können verschiedene geeignete Einrichtungen des Fahrzeugs verwendet werden. Insbesondere kann die Darstellung im Kombiinstrument oder in einem Display an der Mittelkonsole des Fahrzeugs erfolgen, aber auch eine mobile Nutzervorrichtung, etwa ein Mobiltelefon, kann hierzu verwendet werden. Dabei werden vorteilhafterweise die relevanten einstellbaren Planungsparameter gleichzeitig dargestellt und können mittels einer Bedienhandlung innerhalb der graphischen Benutzeroberfläche direkt verändert werden. Zu diesen Planungsparametern gehören der Anfangszeitpunkt und der Endzeitpunkt des Ladevorgangs. Ferner werden graphische Objekte angezeigt, die dem verfügbaren Ladestrom zugeordnet sind. Indem die Benutzeroberfläche möglichst viele der Planungsparameter umfasst, die der Benutzer selbst einstellen kann, erkennt der Benutzer auf vorteilhafte Weise, in welchem Zeitraum das Laden der Batterie geplant ist, und er kann schnell und intuitiv erfassen, welche Folgen eine Veränderung der Planungsparameter für den gesamten Zeitplan haben wird.

Eine graphische Benutzeroberfläche im Sinne des Erfindung ist eine Mensch-Maschine-Schnittstelle, wobei die Steuerung mittels graphischer Objekte erfolgt. Erfindungsgemäß werden Zeitdaten mittels graphischer Objekte dargestellt, beispielsweise durch eine Markierung auf dem Zifferblatt einer Uhr oder an einer anderen Zeitskala. Graphische Objekte können bedienbar sein und werden in diesem Fall im Folgenden "Bedienelemente" genannt. Unter einem "Bedienelement" wird im Sinne der Erfindung ein graphisches Objekt einer graphischen Benutzeroberfläche verstanden. Ein Bedienelement unterscheidet sich von Elementen und Flächen zur reinen Informationsanzeige, sogenannten "Anzeigeelementen", darin, dass es auswählbar ist. Bei einer Auswahl eines Bedienelements wird eine ihm zugeordnete Funktion ausgeführt. Die Funktion kann zu einer bloßen Veränderung der Informationsanzeige führen, darüber hinaus können über das Bedienelement Daten für Einrichtungen eingegeben werden, deren Bedienung von der Informationsanzeige unterstützt wird. Die Schaltelemente können somit herkömmliche mechanische Schalter und Regler ersetzen. Zum Beispiel kann der Benutzer zur Veränderung eines Planungsparameters eine Verschiebung durchführen, etwa mittels eines Zeigegerätes (beispielsweise einer Computermaus) oder mittels einer berührungsempfindlichen Oberfläche direkt auf der Oberfläche eines Bildschirms, eines sogenannten Touchscreens.

Bei dem erfindungsgemäßen Verfahren kann der Benutzer zur Eingabe einstellbarer Planungsparameter insbesondere Bedienhandlungen auf der Oberfläche eines Touchscreens verwenden. Beispielsweise kann eine Folie über der Oberfläche der Ausgabeeinheit angeordnet sein, mit welcher die Position einer Berührung eines Betätigungsobjekts detektiert werden kann. Bei dem Betätigungsobjekt handelt es sich insbesondere um die Fingerspitze eines Nutzers. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von der Fingerspitze eines Nutzers ausgeht, gemessen wird.

Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche angezeigten graphischen Objekt zugeordnet werden. Des Weiteren kann die Länge der Berührung bei einer bestimmten Position oder innerhalb eines bestimmten Bereichs erfasst werden. Ein Wert eines Planungsparameters kann zum Beispiel auch durch Markieren einer Position in einer graphischen Darstellung eingegeben werden, zum Beispiel eine Uhrzeit durch Antippen einer Stelle auf dem Rand der Darstellung eines Zifferblatts. Alternativ kann ein Bedienelement durch Berühren ausgewählt und durch eine Wischbewegung an einen anderen Ort "gezogen" werden, was wiederum eine Veränderung des zugeordneten Planungsparameters bewirkt.

Touchscreens sind verbreitete Eingabegeräte, sowohl in Fahrzeugen, wo sie vor allem an der Mittelkonsole eine zentrale Rolle einnehmen, als auch bei Mobiltelefonen und mobilen Computern. Graphische Benutzeroberflächen können hierbei eine besonders einfache Eingabe ermöglichen, indem Bedienelemente direkt auf dem Bildschirm berührt und verschoben werden können. Ferner können Positionen auf dem Bildschirm durch eine direkte Berührung des Benutzers markiert werden, was ebenfalls die Eingabe von Daten, etwa auf einer Skala, erlaubt.

Daneben kann die Eingabe auch durch eine andere Eingabeeinrichtung erfolgen, die etwa Eingaben mittels Gesten erfasst. In diesem Fall werden Bewegungen des Benutzers, zum Beispiel ein Drehen der Hand, registriert und als Eingaben verarbeitet. Eine andere Eingabeeinrichtung umfasst einen Dreh-Drück-Schalter, bei dem durch Drehen einer mechanischen Bedienvorrichtung ein Wert verändert werden kann und die Eingabe durch Drücken bestätigt wird. Ferner können Zeigegeräte verwendet werden, wie sie im Computerbereich verbreitet sind. Beispielsweise ist es bei Personalcomputern üblich, graphische Benutzeroberfläche mit einer Computermaus oder einem Joystick, sowie einer Tastatur zu bedienen. Bei tragbaren Computern werden beispielsweise berührungsempfindliche Flächen (Trackpads) genutzt. Diese Möglichkeiten können auch in einem Fahrzeug implementiert werden.

Die graphische Darstellung umfasst Informationen zum Zeitraum des geplanten Ladevorgangs, insbesondere sind Anfangs- und Endzeitpunkt dargestellt. Ferner wird der Ladestrom angezeigt. In der graphischen Darstellung kann auch angezeigt werden, ob das Fahrzeug mit einer Ladeeinrichtung verbunden ist. Während des Ladevorgangs kann etwa ein bestimmtes graphisches Objekt angezeigt oder in seiner Darstellung verändert werden, etwa das Symbol eines Steckers, der durchgestrichen ist, wenn keine Ladeeinrichtung verbunden ist. Ein graphisches Objekt kann ferner seine Helligkeit dynamisch verändern, beispielsweise blinken oder blitzen, oder seine Farbe ändern, etwa zwischen Rot und Grün wechseln. Ferner kann sich ein graphisches Objekt innerhalb der Anzeige bewegen, beispielsweise kann eine kreisende Bewegung signalisieren, dass der Ladevorgang ausgeführt wird, während der Stillstand desselben Objekts Warten auf das Verbinden mit der Ladeeinrichtung signalisiert. Auf diese Weise wird dem Benutzer signalisiert, dass das Fahrzeug gerade einen Ladevorgang durchführt, dass also der Zeitplan zum Laden des Energiespeichers durchgeführt wird.

Gemäß dem erfindungsgemäßen Verfahren umfassen die Graphikdaten der graphischen Benutzeroberfläche ein für alle Lademodi des Energiespeichers übergreifendes Graphikelement, welches eine Zeitskala umfasst und an dem graphische Objekte angeordnet sind, die selbst den Zeitdaten des Zeitplans zugeordnet sind. Die Anzeige ist dadurch vorteilhafterweise besonders leicht und schnell erfassbar, weil an dem übergreifenden Graphikelement die Zeitdaten leicht verständlich dargestellt und intuitiv verändert werden können. Ein solches Graphikelement kann eine Uhr symbolisieren, aber auch eine lineare Zeitachse oder die Darstellung eines Kalenders.

Dieses Graphikelement ist gemäß der Erfindung "übergreifend", weil es zur Darstellung von Zeitdaten in allen Lademodi des Energiespeichers verwendet wird. Es ist ein wiederkehrendes Element der graphischen Benutzeroberfläche, im Sofortlademodus wie im Programmlademodus, ob das Fahrzeug mit einer Ladeeinrichtung verbunden ist oder nicht. Zudem umfassen die Graphikdaten die wesentlichen Parameter zur Erzeugung des Zeitplans. Der Benutzer muss also nicht mehrere Menüs aufrufen oder andere Bedienschritte ausführen, um die relevanten Parameter zur Erstellung des Zeitplans und den Zeitplan selbst zu erfassen, oder Planungsparameter zu verändern. Stattdessen sind insbesondere alle Zeitdaten am selben Graphikelement dargestellt. Dies hat zudem den Vorteil, dass die Darstellung des Zeitplans in wiedererkennbarer Weise erfolgt, etwa wenn sie in verschiedenen Fahrzeugmodellen ähnlich implementiert ist.

Bei einer Ausbildung des erfindungsgemäßen Verfahrens umfassen die Graphikdaten der graphischen Benutzeroberfläche im Programmlademodus ferner zumindest ein graphisches Objekt, das der Wiederholung des programmierten Zeitplans zugeordnet ist und das durch eine Bedienhandlung mittels der graphischen Benutzeroberfläche direkt bedienbar ist. Beispielsweise kann ein Zeitplan für jeden der Tage von Montag bis Freitag definiert werden, während für Samstag und Sonntag ein anderer Zeitplan erzeugt wird. Ferner kann ein Zeitplan einmalig ausgeführt werden. Diese Wiederholungen können beispielsweise durch die Anzeige eines Bedienelements mit einem entsprechendem Text und/oder Symbol gekennzeichnet werden. Der Benutzer kann auf diese Art vorteilhafterweise sofort erkennen, wann der angezeigte Zeitplan ausgeführt wird, und mittels des Bedienelements das gewünschte Intervall einstellen. Beispielsweise kann durch Betätigen des Bedienelements ein Auswahlmenü aufgerufen werden, aus dem einzelne Wochentage auswählbar sind.

Bei einer Ausbildung der Erfindung wird, wenn das Fahrzeug im Programmlademodus nicht mit einer Ladeeinrichtung verbunden ist, anhand des aktuellen Energieinhalts, des Ladestroms und des Endzeitpunkts des geplanten Ladevorgangs der späteste Verbindungszeitpunkt bestimmt, zu dem das Fahrzeug mit einer Ladeeinrichtung verbunden werden muss, um den Ziel-Energieinhalt bis zum geplanten Endzeitpunkt zu erreichen. Dieser Ladestrom kann auch durch manuelle Eingabe vorgegeben werden.

Ferner umfassen die Graphikdaten zumindest ein graphisches Objekt, das diesem spätesten Verbindungszeitpunkt zugeordnet ist. Auf diese Weise wird der Benutzer vorteilhafterweise darauf hingewiesen, wann das Fahrzeug spätestens mit einer Ladeeinrichtung verbunden werden muss, um den Zeitplan ausführen zu können. Da geeignete Ladeeinrichtungen nicht jederzeit und überall verfügbar sind, muss der Benutzer das Verbinden des Fahrzeugs mit einer solchen Ladeeinrichtung im Voraus planen. Die Verbindung darf dabei nicht zu spät erfolgen, um ein Laden des Energiespeichers zum gewünschten Energieinhalt und zur gewünschten Zeit zu ermöglichen. Indem der späteste Verbindungszeitpunkt graphisch angezeigt wird, erkennt der Benutzer schnell und intuitiv, bis wann er das Fahrzeug spätestens mit der Ladeeinrichtung verbunden haben muss.

Wenn der geplante oder tatsächliche Zeitpunkt der Verbindung des Fahrzeugs mit einer Ladeeinrichtung zu spät ist, um den gewünschten Energieinhalt des Energiespeichers bis zum geplanten Abfahrtszeitpunkt zu erreichen, dann kann eine Warnmeldung ausgegeben werden. Der Benutzer kann auf diese Weise erkennen, wenn der geplante Ladevorgang nicht zum gewünschten Ergebnis führen kann. Die Graphikdaten können in diesem Fall den voraussichtlichen Energieinhalt des Energiespeichers am Ende des geplanten Ladevorgangs umfassen. Ferner können Alternativen dargestellt werden, wie der Konflikt etwa durch Wahl eines höheren Ladestroms, einer späteren Abfahrtszeit oder eines früheren Verbindungszeitpunkts zu beheben ist.

In einer weiteren Ausbildung der Erfindung wird ein Erinnerungszeitpunkt, der vor dem spätesten Verbindungszeitpunkt liegt, bestimmt und eine Erinnerungsmeldung wird ausgegeben, wenn bei Erreichen des Erinnerungszeitpunkts das Fahrzeug nicht mit einer Ladeeinrichtung verbunden ist. Ferner können die Graphikdaten ein Bedienelement umfassen, das dem Erinnerungszeitpunkt zugeordnet ist und diesen einerseits in der Benutzeroberfläche anzeigt und andererseits erlaubt, diesen Zeitpunkt manuell zu verändern. Der Benutzer kann den Erinnerungszeitpunkt beispielsweise so verschieben, dass er rechtzeitig vor einer längeren Phase der Abwesenheit daran erinnert wird, das Fahrzeug mit der Ladeeinrichtung zu verbinden. Durch die Erinnerungsmeldung wird der Benutzer auf vorteilhafte Weise darauf hingewiesen, dass er das Fahrzeug mit einer Ladeeinrichtung verbinden muss, um den Ziel-Energieinhalt erreichen zu können.

Bei einer Weiterbildung wird die Erinnerungsmeldung an eine mobile Nutzervorrichtung übertragen und von dieser ausgegeben. Eine solche mobile Nutzervorrichtung kann ein Mobiltelefon sein, auf dem zum Erinnerungszeitpunkt eine Erinnerungsmeldung angezeigt wird. Zur Ausgabe einer solchen Meldung können Kurzmitteilungsdienste genutzt werden, aber auch "Push-Benachrichtigungen", bei denen eine Meldung direkt auf dem Mobiltelefon angezeigt wird, oder spezialisierte Programme, sogenannte "Apps", die etwa über das Internet Informationen aus dem Fahrzeug abrufen, verarbeiten und Erinnerungsfunktionen auf dem Mobiltelefon ausführen. Der Benutzer wird so in vorteilhafter Weise an den spätesten Verbindungszeitpunkt erinnert, selbst wenn er sich nicht im Fahrzeug befindet.

In einer Ausbildung des erfindungsgemäßen Verfahrens umfasst das Fahrzeug eine Klimatisierungseinheit. Die erfassten Planungsparameter umfassen ferner Daten über eine geplante Klimatisierung des Fahrzeugs, der erzeugte Zeitplan umfasst Zeitdaten zur Klimatisierung und die Graphikdaten der graphischen Benutzeroberfläche umfassen ferner zumindest ein graphisches Objekt, das den Daten über eine geplante Klimatisierung zugeordnet ist und das durch eine Bedienhandlung mittels der graphischen Benutzeroberfläche direkt bedienbar ist. Der Benutzer kann somit vorteilhafterweise die Klimatisierung des Fahrzeugs so vorausplanen, dass beispielsweise zu einer bestimmten Abfahrtszeit das Fahrzeug auf eine bestimmte Temperatur vorgeheizt oder gekühlt wird. Relevante Planungsparameter zur Klimatisierung des Fahrzeugs können etwa die Zieltemperatur und die geplante Abfahrtszeit sein, ferner kann die Klimatisierung an- und ausgeschaltet werden. Die einstellbaren Planungsparameter und andere Daten über die Klimatisierung des Fahrzeugs werden in die graphische Benutzeroberfläche integriert, sodass der Benutzer weitere wichtige Informationen darüber erfassen und steuern kann, welche Vorgänge im Fahrzeug automatisch durchgeführt werden, bevor er beispielsweise am nächsten Morgen losfährt.

Bei einer Weiterbildung der Erfindung wird die Temperatur innerhalb und/oder außerhalb des Fahrzeugs erfasst und die anzeigten Graphikdaten umfassen ferner Daten über die erfasste Temperatur. Dies ist insbesondere für die Klimatisierung des Fahrzeugs von Bedeutung, da die Temperaturdifferenz zwischen Fahrzeuginnenraum und -außenraum die für die Klimatisierung notwendige Zeit bestimmt. Der Benutzer kann vorteilhafterweise diese wichtigen Werte der Anzeige entnehmen.

Bei einer Ausbildung der Erfindung werden die erzeugten Graphikdaten an eine mobile Nutzervorrichtung übertragen und von dieser ausgegeben. Die mobile Nutzervorrichtung kann wiederum ein Mobiltelefon sein, es kann sich aber auch über einen elektronischen Terminplaner (PDA), einen Computer oder eine geeignete Uhr handeln. Der Benutzer kann auf vorteilhafte Weise sämtliche für den Zeitplan relevanten Parameter einer einfachen und intuitiv verständlichen Darstellung entnehmen, selbst wenn er sich nicht im Fahrzeug befindet. Wie bereits oben beschrieben, können verschiedene Dienste eingesetzt werden, um aus der Ferne auf die Daten des Fahrzeugs zuzugreifen. Informationen können etwa durch Kurzmitteilungsdienste übertragen werden, ferner können "Push-Benachrichtigungen" verwendet werden, um eine Meldung etwa direkt auf einem Mobiltelefon anzuzeigen. Anwendungsprogramme, die beispielsweise auf dem Computer, dem PDA oder dem Mobiltelefon implementiert sein können, und etwa über das Internet Informationen aus dem Fahrzeug abrufen, können diese Informationen verarbeiten und so die Grafikdaten auf der mobilen Nutzervorrichtung anzeigen.

Analog zur oben beschriebenen Übertragung der Graphikdaten können in einer weiteren Ausbildung auch weitere Daten vom Fahrzeug an eine mobile Nutzervorrichtung übertragen werden. Diese Daten können beispielsweise die erfassten Daten zum Energieinhalt des Energiespeichers und zum verfügbaren Ladestrom gehören, aber auch die erfassten Benutzereingaben. Ferner können der Zeitplan selbst oder die Parameter zur Erstellung des Zeitplans vom Fahrzeug zur mobilen Nutzervorrichtung übertragen werden. Auf diese Weise kann auf der mobilen Nutzervorrichtung beispielsweise eine eigene graphische Darstellung des Zeitplans erzeugt werden, die sich an den Gegebenheiten des jeweiligen Geräts, etwa an der Größe des Displays, orientiert. Beispielsweise kann eine solche graphische Darstellung gegenüber der im Fahrzeug erzeugten Darstellung reduziert sein und weniger Informationen bereitstellen, um auf einem kleinen Display die Übersichtlichkeit zu wahren. Andererseits kann auf einem größeren Computerbildschirm eine umfassendere Darstellung angezeigt werden, um den zur Verfügung stehenden Platz zu nutzen.

Bei einer Weiterbildung des erfindungsgemäßen Verfahrens können außerdem Daten von einer mobilen Nutzervorrichtung erfasst und zum Fahrzeug übertragen werden. Dies erweitert die Möglichkeiten zur Eingabe insbesondere von Benutzereingaben. Beispielsweise kann ein Benutzer von einem datentechnisch mit dem Fahrzeug gekoppelten Computer aus die Zeitdaten für den gewünschten Zeitplan eingeben, etwa die gewünschte Abfahrtszeit, selbst wenn er sich nicht im Fahrzeug befindet. Ferner ist eine Koppelung mit anderen Systemen möglich. Zum Beispiel kann ein Terminplaner-Programm des Benutzers die Parameter zur Planung des Ladevorgangs automatisch an das Fahrzeug übertragen, sodass der Energiespeicher automatisch so aufgeladen wird, dass in den Terminplan eingetragene Termine erreicht werden können.

Bei einer Ausbildung des erfindungsgemäßen Verfahrens umfassen die erfassten Planungsparameter Zeitdaten zu Zeiträumen und diese Zeiträume werden bei der Erzeugung des Zeitplans priorisiert. Die Graphikdaten der graphischen Benutzeroberfläche umfassen ferner zumindest ein graphisches Objekt, das diesen Zeitdaten zugeordnet ist und das durch eine Bedienhandlung mittels der graphischen Benutzeroberfläche direkt bedienbar ist. Der Benutzer kann auf diese Weise mittels eines Bedienelements zum Beispiel solche Zeiträume definieren, in denen die aus dem Versorgungsnetz entnommene Energie besonders günstig ist, etwa weil die Versorgungsnetze nicht so stark ausgelastet sind und die Energiekosten geringer sind. Umgekehrt können etwa besonders kostenintensive oder anderweitig ungünstige Zeiträume definiert werden. Bei der Erzeugung des Zeitplans werden für die Durchführung des Ladevorgangs bevorzugt solche Zeiträume berücksichtigt, in denen das Aufladen besonders günstig ist. So kann vorteilhafterweise die Entnahme elektrischer Energie aus dem Versorgungsnetz so gestaltet werden, dass etwa die Kosten für den Betrieb des Fahrzeugs minimiert werden.

Durch die Darstellung dieser Zeiträume in der Benutzeroberfläche kann der Benutzer sie schnell und intuitiv erfassen sowie einfach anpassen. Er wird damit bei der Planung des Ladevorgangs unterstützt. Zum Beispiel wird vorteilhafterweise für den Benutzer leicht erkennbar, zu welchen Zeiträumen der Ladevorgang vorzugsweise durchgeführt werden soll. Ändert der Benutzer einen der Parameter, zum Beispiel den geplanten Abfahrtszeitpunkt, so werden die Konsequenzen leicht erkennbar, wenn beispielsweise ein Zeitraum mit höherer Priorität nicht zum Laden der Batterie verwendet werden kann und die Kosten für das Aufladen höher sind. Die Zeiträume, die bei der Erzeugung des Zeitplans priorisiert werden, können manuell eingegeben oder automatisch erfasst werden, sie können allerdings auch fest voreingestellt sein.

Mit der fortschreitenden Umstellung der Energiegewinnung auf regenerative Energiequellen, wie etwa Sonne und Wind, gewinnt die intelligente Verwaltung der Auslastung der Energieversorgungsnetze an Bedeutung. Elektrische Energie soll im besten Falle genau dann entnommen werden, wenn größere Kapazitäten zur Verfügung stehen, während gerade in Zeiten geringerer Energieproduktion auch die Auslastung des Versorgungsnetzes minimiert werden soll. Die Variation der Energiepreise je nach dem Zeitpunkt der Entnahme und/oder der Austausch von Daten zwischen dem Energieversorder und der Steuerung eines Energieverbrauchers sind Mittel, diese günstige Auslastung des Versorgungsnetzes zu erreichen.

Bei einer weiteren Ausgestaltung werden von einem Server Zeitdaten zu Zeiträumen erfasst und diese Zeiträume bei der Erzeugung des Zeitplans priorisiert. Die oben beschriebene Erfassung von günstigen oder ungünstigen Zeiträumen zum Laden des Fahrzeugs wird auf diese Weise automatisiert. Beispielsweise können auf diese Weise zum Aufladen des Energiespeichers besonders geeignete Zeiträume automatisch von einem entfernten Rechner bereitgestellt werden. Die Optimierung des Ladevorgangs wird so vorteilhafterweise erleichtert. Die relevanten Zeitdaten können dabei drahtlos, etwa über ein Mobilfunknetz, an das Fahrzeug übertragen werden, ferner kann beispielsweise eine Ladeeinrichtung die entsprechenden Daten über eine Kabelverbindung bereitstellen.

Bei einer Ausbildung ist das übergreifende Graphikelement eine Darstellung des Zifferblatts einer Uhr, an dem weitere graphische Objekte angeordnet sind, die den Zeitdaten des Zeitplans zugeordnet sind. Diese Darstellung erlaubt es dem Benutzer, Zeitdaten intuitiv und schnell zu erfassen. Vorteilhafterweise wird dazu ein graphisches Element verwendet, das der allgemein verbreiteten und für den Benutzer gewohnten Darstellung von Uhrzeiten entspricht. Dies erlaubt ferner die intuitive Eingabe von Zeitdaten anhand einer dem Benutzer vertrauten Zeitskala.

In einer Weiterbildung des erfindungsgemäßen Erfahrens wird durch Auswahl einer Position am Rand des Zifferblatts eine Änderung eines Zeitpunktes erfasst, wobei die neue Uhrzeit vor der ursprünglichen Uhrzeit liegt, wenn die ausgewählte Position einer Drehung gegen den Uhrzeigersinn von weniger als 180° entspricht, und nach dem ursprünglichen Zeitpunkt, wenn die ausgewählte Position einer Drehung im Uhrzeigersinn von weniger als 180° auf dem Zifferblatt entspricht. Damit können vorteilhafterweise Zeitdaten auf intuitive Weise mittels der Benutzeroberfläche eingegeben werden.

Das dieser Ausgestaltung zugrunde liegende Problem bei der Eingabe von Zeitdaten auf einem Zifferblatt ist, dass bei diesem für gewöhnlich die Zeitspanne von 0 Uhr bis 12 Uhr, bzw. von 12 Uhr bis 24 Uhr durch einen Winkel von 0° bis 360° dargestellt wird. Uhrzeiten am Vor- und Nachmittag sind also nicht unterscheidbar, beispielsweise sind 1 Uhr und 13 Uhr am gleichen Winkel dargestellt. Vor- und Nachmittag können lediglich durch eine weitere Charakterisierung, etwa durch unterschiedlichen Abstand zum Mittelpunkt des Zifferblatts, unterscheidbar dargestellt werden. Tippt also der Benutzer eine Stelle am Rand des Zifferblatts an, um etwa einen Zeitpunkt einzugeben, so muss entschieden werden, ob der Vormittag oder der Nachmittag gemeint ist. Das oben beschriebene Verfahren bestimmt den eingegebenen Zeitpunkt so, dass er nicht länger als sechs Stunden vor oder nach dem aktuellen Wert des Planungsparameters liegt. Dies erleichtert die Eingabe von Zeitdaten, etwa durch Antippen einer Position auf der Darstellung eines Zifferblatts auf einem Touchscreen.

Bei einer Weiterbildung der Erfindung werden die Graphikdaten so erzeugt, dass sie graphische Objekte umfassen, die mehreren alternativen Zeitplänen zugeordnet sind. Dies können zum Beispiel mehrere Zeitpläne entsprechend verschiedenen Ladestromstärken sein. Das Laden der Batterie nimmt bei verschiedenen Stromstärken, die von der Ladeeinrichtung zur Verfügung gestellt werden, unterschiedlich lange Zeit in Anspruch. Ist das Fahrzeug beispielsweise gerade nicht mit einer Ladeeinrichtung verbunden, so muss der Benutzer etwa bei der Auswahl der Ladeeinrichtung darauf achten, mit welchem Ladestrom der Ladevorgang zur geplanten Abfahrtszeit beendet ist. Zum Beispiel können verschiedene Ladedauern durch die Anzeige von verschieden langen, parallelen Kreissegmenten dargestellt werden. Der Benutzer kann somit in vorteilhafter Weise schnell und intuitiv die Zeitpläne für verschiedene Alternativen erfassen und den am besten geeigneten auswählen, etwa durch Auswählen des entsprechenden Kreissegments in der graphischen Benutzeroberfläche.

Bei dem eingangs genannte System sind zumindest zwei Lademodi für den Energiespeicher definiert, nämlich ein Sofortlademodus, bei dem der Ladevorgang sofort nach dem Verbinden des Energiespeichers mit einer Ladeeinrichtung beginnt, und ein Programmlademodus, bei dem der Beginn des Ladevorgangs durch den Zeitplan bestimmt wird. Das System umfasst eine Erfassungseinheit, durch die Daten über den Energieinhalt des Energiespeichers und einen von der Ladeeinrichtung bereitstellbaren Ladestrom erfassbar sind. Es umfasst ferner eine Steuereinheit, durch die Graphikdaten einer graphischen Benutzeroberfläche mit mehreren graphischen Objekten erzeugbar und mittels einer Anzeigeeinheit gleichzeitig anzeigbar ist, wobei ein erstes graphisches Objekt ein für alle Lademodi des Energiespeichers übergreifendes Graphikelement umfasst, welches eine Zeitskala darstellt und an dem weitere graphische Objekte angeordnet sind, ein zweites graphisches Objekt dem Anfangs- und Endzeitpunkt des geplanten Ladevorgangs zugeordnet ist, und ein drittes graphisches Objekt dem ein Ladestrom zugeordnet ist. Das System umfasst ferner eine Eingabeeinheit, durch die einstellbare Planungsparameter als Benutzereingaben zu dem automatischen Laden des elektrischen Energiespeichers erfassbar sind, wobei einstellbare Planungsparameter, die graphischen Objekten zugeordnet sind, durch eine Bedienhandlung mittels der graphischen Benutzeroberfläche direkt veränderbar sind. Ferner umfasst das System eine Recheneinheit, durch die anhand der erfassten Daten und der einstellbaren Planungsparameter der Zeitplan zum automatischen Laden des Energiespeichers erzeugbar ist, wobei ein spätester Verbindungszeitpunkt bestimmbar ist, zu dem das Fahrzeug mit einer Ladeeinrichtung verbunden werden muss, um einen Ziel-Energieinhalt bis zum geplanten Endzeitpunkt zu erreichen, ein Erinnerungszeitpunkt bestimmbar ist und eine Erinnerungsmeldung ausgebbar ist, wenn bei Erreichen des Erinnerungszeitpunkts das Fahrzeug nicht mit einer Ladeeinrichtung verbunden ist. Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

In einer Ausbildung des erfindungsgemäßen Systems umfasst die Eingabeeinheit eine berührungsempfindliche Oberfläche der Ausgabeeinheit. Dies ist insbesondere der Fall bei einem Touchscreen. Die Eingabe von Daten über eine graphische Benutzeroberfläche wird auf diese Weise vorteilhafterweise vereinfacht. Touchscreens sind bereits weit verbreitet und bieten dem Benutzer einen vertrauten Weg, die einstellbaren Planungsparameter anzupassen.

Gemäß einer weiteren Ausgestaltung des erfindungsgemäßen Systems umfassen die Anzeigeeinheit und/oder die Eingabeeinheit eine mobile Nutzervorrichtung. Dies ist beispielsweise dann der Fall, wenn ein Mobiltelefon dazu genutzt wird, die graphische Benutzeroberfläche auszugeben und die angezeigten Planungsparameter zu erfassen. Auf diese Weise kann in vorteilhafter Weise die graphische Darstellung des Zeitplans und der relevanten Parameter auf einer mobilen Nutzervorrichtung erfolgen. Eine solche mobile Nutzervorrichtung kann beispielsweise ein Mobiltelefon sein, ein elektronischer Terminplaner (PDA), ein Computer oder eine Uhr, die zur Ausgabe einer solchen Anzeige und zur Erfassung von Eingaben geeignet ist. Der Benutzer kann den Zeitplan auf diese Weise auch dann ausgeben lassen und anpassen, wenn er sich nicht im Fahrzeug befindet.

Die Erfindung wird nun anhand von Ausführungsbeispielen mit Bezug zu den Zeichnungen erläutert.
Figur 1 zeigt schematisch ein Ausführungsbeispiel eines Systems zur Implementierung des erfindungsgemäßen Verfahrens,
Figur 2 zeigt ein Ausführungsbeispiel einer graphischen Benutzeroberfläche mit mehreren Zeitplänen im Programmlademodus,
Figur 3A und Figur 3B zeigen ein Ausführungsbeispiel einer Bedienhandlung zur Veränderung des geplanten Abfahrtszeitpunkt in einer Anzeige nach Art des in Fig. 2 dargestellten Ausführungsbeispiels,
Figur 4A bis Fig. 4E zeigen ein Ausführungsbeispiel einer Bedienhandlung zur Veränderung des geplanten Abfahrtszeitpunkt in einer Anzeige nach Art des in Fig. 2 dargestellten Ausführungsbeispiels,
Figur 5A und Figur 5B zeigen ein Ausführungsbeispiel einer Bedienhandlung zur Einstellung eines Nachtstromzeitraums,
Figuren 6A bis 6D zeigen ein Ausführungsbeispiel einer Bedienhandlung zur Einstellung des Ladestroms,
Figuren 7A bis 7D zeigen ein Ausführungsbeispiel einer Bedienhandlung zur Einstellung des Wiederholungsintervalls,
Figuren 8A bis 8D zeigen ein Ausführungsbeispiel einer Bedienhandlung zur Einstellung des geplanten Energieinhalts des Energiespeichers,
Figuren 9A und 9B zeigen zwei Ausführungsbeispiele zur Einstellung der Zieltemperatur,
Figuren 10A und 10B zeigen ein Ausführungsbeispiel einer Bedienhandlung zur Einstellung des Wiederholungsintervalls.

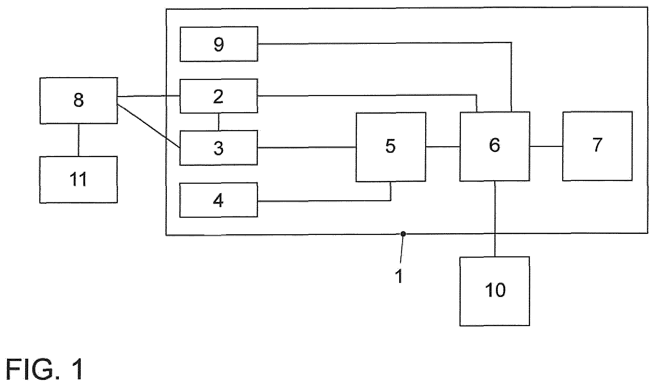

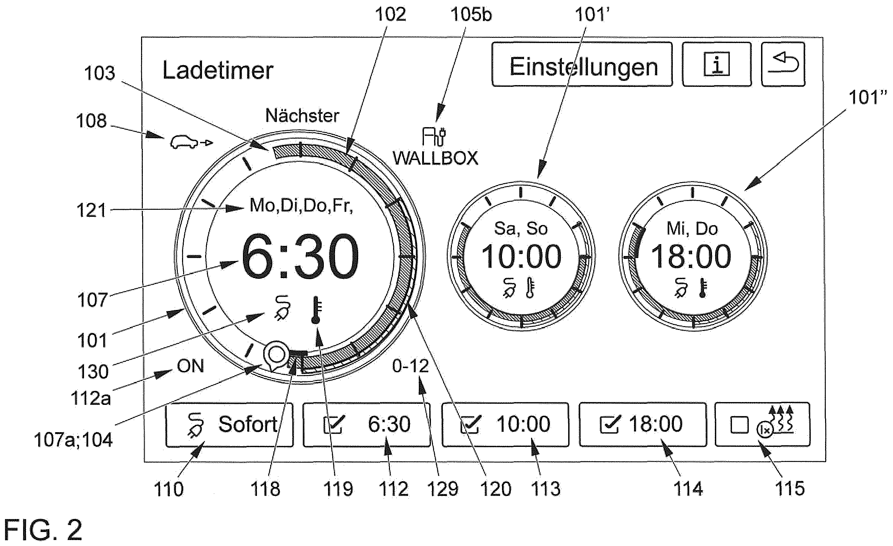

Mit Bezug zu den Fig. 1 und 2 wird ein Ausführungsbeispiel eines Systems zur Implementierung des erfindungsgemäßen Verfahrens erläutert.

Ein Fahrzeug 1 umfasst eine Batterie 2, die elektrische Energie speichert, und einen elektrischen Motor zum Antrieb des Fahrzeugs 1. Es umfasst ferner eine Erfassungseinheit 3, die dazu ausgebildet ist, den aktuellen Energieinhalt der Batterie 2 und die Temperatur im Fahrzeug 1 zu erfassen. Ferner umfasst das Fahrzeug 1 eine Eingabeeinheit 4, mittels derer Eingaben eines Benutzers erfasst werden. Zu diesen Eingaben gehören der geplante Abfahrtszeitpunkt 107 und der Ziel-Energieinhalt 123 der Batterie 2, sowie die gewünschte Temperatur 119 im Fahrzeug 1 zum geplanten Abfahrtszeitpunkt 107. Der Ziel-Energieinhalt 123 kann alternativ auch aus dem Ziel einer Route oder einer gewünschten Reichweite berechnet werden.

Eine außerhalb des Fahrzeugs 1 angeordnete Ladeeinrichtung 8 ist trennbar mit dem Fahrzeug 1 verbunden, insbesondere mit der Batterie 2 und der Erfassungseinheit 3. Die Ladeeinrichtung 8 stellt elektrische Energie zum Aufladen der Batterie 2 zur Verfügung. Die Erfassungseinheit 3 erfasst den von der Ladeeinrichtung 8 bereitgestellten Ladestrom, indem sie von der Ladeeinrichtung 8 Daten über die bereitstellbare Stromstärke, bzw. über verschiedene optional bereitstellbare Stromstärken empfängt. Ferner misst die Erfassungseinrichtung 3 die Stärke des aktuell fließenden Stroms. Sie erfasst ferner Informationen von einem Navigationssystem des Fahrzeugs 1 darüber, welche Stromstärke von einer Ladeeinrichtung 8 am Zielort der gegenwärtigen Route voraussichtlich bereitstellbar sein wird. Andererseits detektiert die Erfassungseinheit 3 auch, ob die Batterie 2 mit einer Ladeeinrichtung 8 verbunden ist oder nicht. Die Ladeeinrichtung 8 wiederum ist datentechnisch mit dem Server 11 gekoppelt und ruft von diesem Daten insbesondere darüber ab, in welchen Zeiträumen 120 die Entnahme elektrischer Energie aus dem Versorgungsnetz zu welchen Preisen möglich ist. Diese Daten werden ebenfalls an die Erfassungseinheit 3 übertragen und stehen zur Verfügung, um kostengünstige Zeiträume 120 zum Aufladen priorisieren zu können.

Für die Batterie 2 sind zwei Lademodi definiert: Im Sofortlademodus beginnt der Ladevorgang, sobald die Batterie 2 mit der Ladeeinrichtung 8 verbunden ist. Im Programmlademodus wird der Ladevorgang anhand eines Zeitplans gesteuert. Der Lademodus der Batterie 2 wird durch eine Benutzereingabe mittels der Eingabeeinheit 4 vorgegeben. Die Erfassungseinheit 3 und die Eingabeeinheit 4 verfügen über Schnittstellen zur Übertragung der erfassten Daten an eine Recheneinheit 5, die wiederum anhand der erfassten Daten einen Zeitplan zum Aufladen der Batterie 2 erzeugt und diesen an eine Steuereinheit 6 des Fahrzeugs 1 überträgt.

Die Steuereinheit 6 verfügt über Schnittstellen zu einer Klimatisierungseinheit 9 und der Batterie 2, um die Ausführung des Zeitplans, d.h. das Aufladen der Batterie 2 und das Klimatisieren des Fahrzeugs 1, zu steuern. Dazu erzeugt die Steuereinheit 6 Signale und überträgt sie an die anderen Einrichtungen des Fahrzeugs 1 derart, dass die im Zeitplan vorgesehenen Prozesse korrekt ausgeführt werden. Zur Ausgabe des Zeitplans erzeugt die Steuereinheit 6 Graphikdaten einer Benutzeroberfläche mit graphischen Objekten, welche die Daten des Zeitplans darstellen. Zu diesen Daten gehören beispielsweise der Ladezeitraum 102, das Ladestromsymbol 105 und der Klimatisierungszeitraum 118. Die graphischen Objekte umfassen auch Bedienelemente, wobei die einstellbaren Planungsparameter so dargestellt sind, dass sie direkt anhand der Benutzeroberfläche durch eine Bedienhandlung verändert werden.

Die Graphikdaten werden über eine Schnittstelle an eine Anzeigeeinheit 7 übertragen und dort ausgegeben. Im dargestellten Fall ist die Anzeigeeinheit 7 ein Display 7 an der Mittelkonsole des Fahrzeugs 1, allerdings können die Graphikdaten auch im Kombiinstrument des Fahrzeugs 1 ausgegeben werden. Außerdem ist eine mobile Nutzervorrichtung 10, im beschriebenen Beispiel ein Mobiltelefon 10, datentechnisch mit der Steuereinheit 6 gekoppelt. Das Mobiltelefon 10 empfängt die Graphikdaten von der Steuereinheit 6 und gibt sie aus, ferner können mittels des Mobiltelefons 10 Daten erfasst werden, womit es als Bestandteil der Eingabeeinheit 4 fungiert.

Nachfolgend wird die Ausführung des erfindungsgemäßen Verfahrens durch das in Fig. 1 dargestellte System erläutert.

Das erfindungsgemäße Verfahren dient dazu, einen Zeitplan zum automatischen Laden der Batterie 2 des Fahrzeugs 1 zu erzeugen und auszugeben, sowie einstellbare Planungsparameter zur Erstellung des Zeitplans zu erfassen. Der Zeitplan legt unter anderem den Beginn 103 und das Ende 104 des geplanten Ladevorgangs fest. Mittels der Erfassungseinheit 4 wird der aktuelle Energieinhalt der Batterie 2 erfasst.

Ferner werden mittels der Eingabeeinheit 4 einstellbare Planungsparameter als Benutzereingaben erfasst, insbesondere der Lademodus, die geplante Abfahrtszeit 107, der Ziel-Energieinhalt 123, die gewünschte Temperatur 119 und das Wiederholungsintervall 121 für den programmierten Zeitplan. Hat der Benutzer noch keine Eingaben vorgenommen, etwa wenn ein völlig neuer Zeitplan erstellt wird, so erzeugt das System automatisch Ausgangswerte. Beispielsweise wird eine bestimmte Abfahrtszeit 107 am frühen Morgen angenommen und der Ziel-Energieinhalt 123 auf den maximalen Wert gesetzt. Wurden bereits andere Zeitpläne programmiert, so dienen die Planungsparameter des zuletzt durchgeführten Zeitplans als Ausgangswerte für die Erzeugung des neuen Zeitplans.

Ist der Sofortlademodus aktiv, so entspricht der Ladebeginn 103 dem Zeitpunkt, bei dem die Batterie 2 mit der Ladeinrichtung 8 verbunden wird. Das Ende 104 des Ladevorgangs wird dann anhand der erfassten Daten berechnet, insbesondere anhand des zur Verfügung stehenden Ladestroms 105 und des aktuellen und des Ziel-Energieinhalts 123.

Im Programmlademodus wird der Zeitplan anhand der erfassten Daten vorausgeplant, wobei der Ladebeginn 103 vom System berechnet wird und nicht notwendigerweise mit dem Zeitpunkt des Verbindens mit der Ladeeinrichtung 8 übereinstimmt. Die Parameter zur Erstellung des Zeitplans sind in diesem Falle insbesondere die geplante Abfahrtszeit 107, der Ziel-Energieinhalt 123 und einer oder mehrere Zeiträume 120 für die kostengünstige Entnahme elektrischer Energie.

Auf Grundlage der von der Erfassungseinheit 3 und der Eingabeeinheit 4 erfassten Daten und Benutzereingaben erzeugt die Recheneinheit 5 den Zeitplan zum Laden der Batterie 2 und zum Klimatisieren des Fahrzeugs 1. Bei der Erzeugung des Zeitplans wird insbesondere berücksichtigt, zu welchem Abfahrtszeitpunkt die Batterie 2 welchen Ziel-Energieinhalt 123 erreicht haben soll. Ferner werden Zeiträume entsprechend den vom Server 11 abgerufenen Energiekosten priorisiert, um das Aufladen möglichst kostengünstig zu gestalten. Die Erstellung des Zeitplans ist also eine Optimierungsaufgabe, bei der die beste Variante aus einer Vielzahl möglicher Zeitpläne bestimmt wird.

Der Zeitplan umfasst insbesondere einen Startzeitpunkt 103, zu dem der Ladevorgang beginnen soll, sowie einen Endzeitpunkt 104, zu dem der Ladevorgang voraussichtlich endet. Vor dem geplanten Startzeitpunkt 103, zu dem der Ladevorgang beginnen muss, um den gewünschten Ziel-Energieinhalt 123 der Batterie 2 bis zum Abfahrtszeitpunkt 107 zu erreichen, ist ein Erinnerungszeitpunkt 122 definiert. Zur Berechnung des Erinnerungszeitpunkts 122 wird anhand des aktuellen Energieinhalts der Batterie 2, des zu erreichenden Energieinhalts 123 und des zur Verfügung stehenden Ladestroms 105 die voraussichtliche Ladedauer 106 berechnet. Zusammen mit dem gewünschten Abfahrtszeitpunkt 107 ergibt sich so ein spätester Verbindungszeitpunkt, bei dem das Fahrzeug 1 mit der Ladeeinrichtung 8 verbunden werden muss, um den gewünschten Energieinhalt 123 bis zum Abfahrtszeitpunkt 107 zu erreichen. Dieser spätestes Verbindungszeitpunkt kann auch in der Anzeige dargestellt werden. Der Erinnerungszeitpunkt 122 wird dann eine bestimmte Zeitspanne vor dem spätesten Verbindungszeitpunkt definiert, allerdings erlaubt die Eingabeeinheit 4 dem Benutzer auch eine eigene Festlegung, etwa durch Verschieben des zugeordneten Symbols auf der Benutzeroberfläche.

Zum Erinnerungszeitpunkt 122 wird eine Erinnerungsmeldung ausgegeben, die den Benutzer auffordert, die Batterie 2 mit der Ladestation 8 zu verbinden. Die Ausgabe der Meldung erfolgt mittels der Anzeigeeinheit 7 und des Mobiltelefons 10. Dabei wird im beschriebenen Fall auch der späteste Verbindungszeitpunkt mitgeteilt, das heißt, der Benutzer erfährt rechtzeitig vorher, zu bis zu welchem Zeitpunkt er die Batterie 2 spätestens mit der Ladeeinrichtung 8 verbinden muss, um den geplanten Ladevorgang durchführen zu können. Im gezeigten Ausführungsbeispiel wird eine "Push-Mitteilung" an das Mobiltelefon 10 gesendet und dem Benutzer direkt angezeigt. In anderen Ausführungen wird eine Kurzmitteilung an das Mobiltelefon 10 gesendet oder eine Erinnerung mittels eines spezialisierten Programms, einer sogenannten "App", ausgegeben.

Der Zeitplan wird an die Steuereinheit 6 übertragen. Diese hat zwei Funktionen: Einerseits steuert sie die Ausführung des erzeugten Zeitplans, indem sie zur richtigen Zeit geeignete Signale zum Aufladen an die Batterie 2 und zum Klimatisieren des Fahrzeugs 1 an die Klimatisierungseinheit 9 überträgt. Andererseits erzeugt sie Graphikdaten einer graphischen Benutzeroberfläche zur Ausgabe des Zeitplans und zur Eingabe von Planungsparametern. Sie überträgt diese Benutzeroberfläche an die Anzeigeeinheit 7 und das Mobiltelefon 10, wo sie für den Benutzer dargestellt wird. Sowohl die Anzeigeeinheit 7, als auch das Mobiltelefon 10 verfügt über eine berührungsempfindliche Oberfläche, die zur Eingabeeinrichtung 4 gehört. Die Benutzeroberfläche wird also auf sogenannten Touchscreens angezeigt.

Die Graphikdaten umfassen graphische Objekte, wobei insbesondere drei graphische Objekte gleichzeitig angezeigt werden: Ein graphisches Objekt umfasst ein übergreifendes Graphikelement 101, das eine Zeitskala darstellt und an dem weitere graphische Objekte angeordnet sind, die den Zeitdaten zugeordnet sind. Ferner ist ein graphisches Objekt 102 dem Ladezeitraum zugeordnet sowie ein Symbol 105 dem Ladestrom. Im Ausführungsbeispiel wird der Ladezeitraum durch ein Kreissegment 102 dargestellt, durch das auch der Beginn 103 und das Ende 104 des Ladezeitraums ablesbar sind. Das übergreifende Graphikelement 101 ist in diesem Ausführungsbeispiel eine Darstellung eines Zifferblatts 101. Dieses Zifferblatt wird "übergreifend" für alle Lademodi des Energiespeichers 2 in ähnlicher, wiedererkennbarer Form angezeigt und die jeweils relevanten Zeitdaten sind an ihm angeordnet.

Den Planungsparametern zugeordnete graphische Objekte sind als Bedienelemente gebildet, die mittels des Touchscreens ausgewählt und bedient werden können. Das heißt, das System detektiert den Ort einer Berührung durch den Benutzer auf der Oberfläche des Touchscreens. Diesem Ort wird das dort dargestellte Bedienelement zugeordnet und durch eine definierte Bedienhandlung wird der zugeordnete Planungsparameter verändert. Im in Fig. 2 dargestellten Fall kann der Benutzer das Symbol 107a für den Abfahrtszeitpunkt 107 berühren und durch eine Wischbewegung entlang des Zifferblatts 101 bewegen. Durch Loslassen wird der Abfahrtszeitpunkt 107 auf die neu eingestellte Uhrzeit gesetzt. Analog dazu werden einzelne Funktionen durch Antippen des jeweils zugeordneten graphischen Objekts aktiviert oder deaktiviert. Näheres zu den Bedienhandlungen ist weiter unten beschrieben.

Wird ein Planungsparameter in der Benutzeroberfläche verändert, so wird auf Grundlage der geänderten Planungsparameter ein neuer Zeitplan erzeugt und ausgegeben. Auf diese Weise sieht der Benutzer sofort die Konsequenzen einer Änderung und kann abschätzen, ob weitere Anpassungen notwendig sind. Die Erzeugung des Zeitplans und der Graphikdaten wechselt sich also mit der Eingabe der Planungsparameter in einer Schleife ab, sodass der Benutzer jederzeit Änderungen vornehmen kann und der Zeitplan neu erzeugt wird.

Erkennt die Recheneinheit 5 bei der Erstellung des Zeitplans, dass mit den vorgegebenen Planungsparametern der Ziel-Energieinhalt 123 der Batterie 2 nicht zum gewünschten Abfahrtszeitpunkt 107 zu erreichen ist, dann umfassen die erzeugten Graphikdaten eine Warnmeldung, die den Fahrer auf den bestehenden Konflikt und gegebenenfalls auf Lösungsmöglichkeiten hinweist. Erfolgt etwa die Verbindung des Fahrzeugs 1 mit der Ladeeinrichtung 8 zu spät, so umfassen die Graphikdaten eine Angabe des unter den gegebenen Umständen voraussichtlich erreichbaren Energieinhalts und der daraus resultierenden Reichweite des Fahrzeugs 1 zum geplanten Abfahrtszeitpunkt 107. Ferner enthalten die Graphikdaten Hinweise auf Alternativen um den Konflikt zu beheben, etwa durch Wahl einer Ladestation 8 mit höherem Ladestrom, einen späteren Abfahrtszeitpunkt 107 oder einen früheren Verbindungszeitpunkt. Der gewünschte alternative Zeitplan kann vom Benutzer durch Antippen eines diesem Zeitplan zugeordneten Bedienelements ausgewählt werden.

Mit Bezug zu Fig. 2 wird ein Ausführungsbeispiel einer graphischen Benutzeroberfläche mit mehreren Zeitplänen im Programmlademodus erläutert.

Die dargestellte Anzeige wird von dem in Fig. 1 gezeigten System nach dem oben beschriebenen Verfahren von der Steuereinheit 6 erzeugt und von der Ausgabeeinheit 7 des Fahrzeugs 1, in diesem Fall auf einem Touchscreen, ausgegeben. Die Batterie 2 befindet sich im Programmlademodus, das heißt, der Ladevorgang wird vorausgeplant und beginnt nicht sofort, wenn die Batterie 2 mit der Ladestation 8 verbunden wird. In der Anzeige sind drei Zeitpläne dargestellt. Die jeweiligen Zeitdaten sind an drei Graphikelementen angezeigt, die Zifferblätter 101, 101'und 101" darstellen. Die Zifferblätter 101, 101' und 101" umfassen jeweils einen Kreis und, in gleichmäßigen Abständen daran angeordnet, zwölf Markierungen in radialer Richtung. Der Ladezeitraum 102 ist als Kreissegment dargestellt, das parallel zum Rand des Zifferblatts 101 vom Startzeitpunkt 103 bis zum Endzeitpunkt 104 verläuft. Analog dazu umfasst die Darstellung einen Klimatisierungszeitraum 118 und einen Nachtstromzeitraum 120.

Die Darstellung 101 des aktiven Zeitplans ist gegenüber den anderen Darstellungen 101' und 101" der anderen beiden Zeitpläne vergrößert und mit stärkerer Helligkeit dargestellt. Ferner enthält die Darstellung 101 des aktiven Zeitplans Bedienelemente, die einstellbaren Planungsparametern zugeordnet sind, während die kleiner dargestellten Darstellungen 101' und 101" als jeweils ein Bedienelement aufzufassen sind. Durch Antippen einer der Darstellungen 101' und 101" werden die Rollen vertauscht: Der dem angetippten Element zugeordnete Zeitplan wird aktiv, während die Darstellung 101 inaktiv wird. Der Benutzer kann auf diese Weise auswählen, an welchem Zeitplan er Einstellungen vornehmen will.

Am unteren Rand der Anzeige befinden sich Bedienelemente zum Wechsel in den Sofortlademodus 110, zum Aktivieren der verfügbaren programmierten Ladevorgänge 112, 113 und 114, sowie zum Aktivieren des programmierten Klimatisierungsvorgangs 115. Im dargestellten Fall sind die Ladeprogramme 112, 113 und 114 aktiv, verdeutlicht durch einen Haken. Das Klimatisierungsprogramm 115 ist nicht aktiviert, der Haken fehlt hier. Der Benutzer kann durch Antippen eine Aktivierung vornehmen. Der auf dem Zifferblatt 101 dargestellte Zeitplan entspricht dem Ladeprogramm 112 mit der Abfahrtszeit 6:30 Uhr, die Aktivitätsanzeige 112a zeigt daher "ON" an und bestätigt, dass der Zeitplan aktiviert ist.

Bei dem dargestellten Ausführungsbeispiel ist die geplante Abfahrtszeit 107 mittig auf dem Zifferblatt 101 angezeigt. Ferner wird das Wiederholungsintervall 121 auf dem Zifferblatt 101 angezeigt. Im dargestellten Fall wird der programmierte Ladevorgang am Montag, Dienstag, Donnerstag und Freitag ausgeführt. Weitere Symbole auf dem Zifferblatt 101 zeigen den Ladetimerstatus 130 und den Klimatisierungsstatus 119 an. Sie erscheinen farbig, wenn ein Programm zum Laden der Batterie 2 bzw. zum Klimatisieren des Fahrzeugs 1 aktiv ist, und erscheinen grau oder sind ausgeblendet, wenn die entsprechende Funktion nicht aktiv ist. In einer anderen Ausführung werden die entsprechenden Symbole ausgeblendet, wenn die jeweilige Funktion nicht aktiv ist. Im dargestellten Fall ist für den aktiven Zeitplan auf dem Zifferblatt 101 ein Zeitplan dargestellt, der ein Programm für das Laden der Batterie 2 und eine Klimatisierung des Fahrzeugs 1 umfasst. Im Kontrast dazu umfasst der auf dem Zifferblatt 101' dargestellte Zeitplan lediglich einen Ladevorgang.

Am Rand des Zifferblatts 101 wird die Dauer programmierter Zeiträume und Prozesse durch Kreissegmente unterschiedlicher Länge dargestellt. Zur Unterscheidung mehrerer Typen von Zeitdaten, etwa dem Klimatisierungszeitraum 118, dem Ladezeitraum 102 und dem Nachtstromzeitraum 120, sind die entsprechenden Kreissegmente von außen nach innen geordnet und durch unterschiedliche Breite und Farbe voneinander unterscheidbar. Ferner ist der geplante Abfahrtszeitpunkt 107 als Symbol 107a dargestellt. In diesem Fall fällt der geplante Abfahrtszeitpunkt 107 mit dem Zeitpunkt des Ladeendes 104 zusammen.

Eine Drehung auf dem Zifferblatt 1 um 360° entspricht einer Dauer von zwölf Stunden. Um Uhrzeiten auf der Skala ablesen zu können, wird daher eine AM/PM-Anzeige 129 angezeigt, die im dargestellten Fall darauf hinweist, dass die dargestellten Uhrzeiten in der ersten Tageshälfte liegen. Dies betrifft nur die explizit dargestellten Zeitpunkte, in diesem Fall also den geplanten Abfahrtszeitpunkt 107a. Das Ende des Ladezeitraums 102 und das Ende des Klimatisierungszeitraums 118 fallen mit dem Abfahrtszeitpunkt 107a zusammen. Der Ladezeitraum 102 wird als Kreissegment gezeigt, das die 12-Uhr-Marke überschreitet. Dabei ist intuitiv für den Benutzer erkennbar, dass der Ladebeginn keine Uhrzeit nach dem Ladende ist, sondern davor liegt, dass also im dargestellten Fall der Ladebeginn um 23:30 Uhr des Vortages ist, nicht um 11:30.

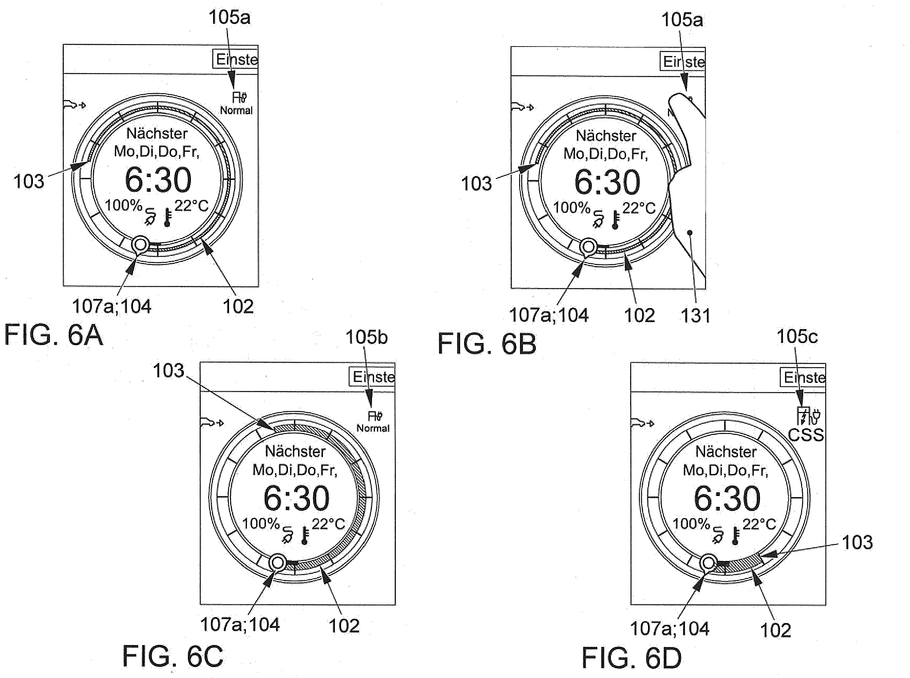

Das Ladestromsymbol 105b zeigt an, dass die Batterie 2 zur Durchführung des dargestellten Zeitplans mit einer Ladestation 8 vom Typ "Wallbox" verbunden sein soll. Dadurch ist ein bestimmter zur Verfügung stehender Ladestrom definiert. Der dargestellte Zeitplan ist unter der Annahme erzeugt worden, dass dieser Ladestrom von der Ladeeinrichtung 8 zum Zeitpunkt des Ladebeginns 103 bereitstellbar sein wird. Verschiedene Ladestromsymbole 105b und der Wechsel zwischen verschiedenen Ladeströmen ist unten anhand Fig. 6 erläutert.

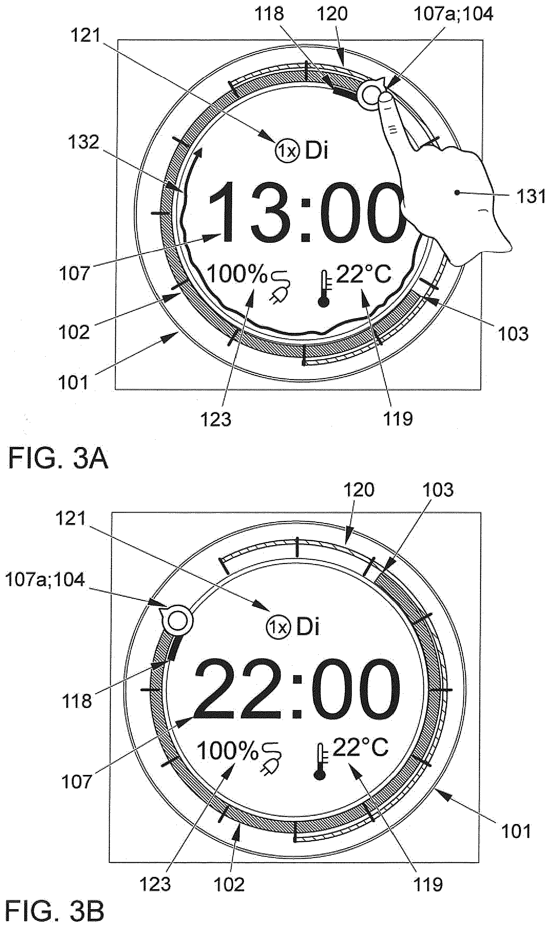

Die Anzeige befindet sich im Abfahrtsmodus 108, der durch das Symbol 108 kenntlich gemacht wird. Der Benutzer kann daraus erkennen, dass die Anzeige darauf gerichtet ist, dass die Abfahrtszeit 107 eingestellt werden kann, das heißt, das dem Abfahrtszeitpunkt 107 zugeordnete Graphikelement 107a kann durch eine Benutzerhandlung direkt in der graphischen Benutzeroberfläche verändert werden. Ein Ausführungsbeispiel einer solchen Benutzerhandlung ist unten anhand der Fig. 3 näher erläutert.

Mit Bezug zu Fig. 3A und Fig. 3B wird ein Ausführungsbeispiel einer Bedienhandlung zur Veränderung des geplanten Abfahrtszeitpunkts in einer Anzeige nach Art des in Fig. 2 dargestellten Ausführungsbeispiels erläutert.

Fig. 3A zeigt eine Anzeige analog zu dem in Fig. 2 gezeigten Fall. Hier ist der geplante Abfahrtszeitraum 107 um 13:00 Uhr. Als Wiederholungsintervall 121 ist angezeigt, dass das Programm einmal am Dienstag ausgeführt werden soll. Ferner zeigt der Klimatisierungsstatus 119 an, dass das Fahrzeug bis zum Abfahrtszeitpunkt 107 auf 22°C geheizt werden soll, der Ziel-Energieinhalt 123 beträgt 100% der maximalen Kapazität der Batterie 2. Entsprechend diesen Planungsparametern wurde ein Zeitplan erzeugt und angezeigt, wobei die Darstellung den Ladezeitraum 102, den Nachtstromzeitraum 120 und den Klimatisierungszeitraum 118 enthält.

Der Abfahrtszeitpunkt 107 ist als Bedienelement 107a dargestellt. Die Bedienung, das heißt die Benutzerhandlung zum Verändern des Planungsparameters "Abfahrtszeit" 107, erfolgt mittels einer Berührung des dargestellten graphischen Elements 107a mit dem Finger 131 des Benutzers und nachfolgendem Ziehen des Symbols über die Benutzeroberfläche entlang des Pfades 132. Im dargestellten Beispiel wird die Abfahrtszeit 107 von 13:00 Uhr (Fig. 3A) auf 22:00 Uhr (Fig. 3B) umgestellt. Das System erkennt dabei automatisch, dass der Benutzer einem Pfad 132 im Uhrzeigersinn folgt, dass also ein späterer Zeitpunkt eingestellt werden soll. Im Gegensatz dazu wird durch einen Pfad gegen den Uhrzeigersinn einen frühere Zeit ausgewählt.

Die Recheneinheit 5 erzeugt einen neuen Zeitplan und die Steuereinheit 6 erzeugt neue Graphikdaten, die wiederum von der Anzeigeeinheit 7 ausgegeben werden. Dies geschieht in Echtzeit, das heißt, der Benutzer kann die Veränderung des Zeitplans beobachten, während er gerade den Planungsparameter "Abfahrtszeit" 107 verändert. Dies ermöglicht eine intuitive und einfache Bedienung, da die Auswirkungen der Änderung sofort in der Anzeige für den Benutzer erfassbar sind. Im dargestellten Fall wird bei gleichbleibender Ladedauer und Klimatisierungsdauer der jeweilige Endpunkt verschoben. Entsprechend werden die Kreissegmente für den Ladezeitraum 102 und den Klimatisierungszeitraum 118 in Fig. 3B rotiert dargestellt gegenüber Fig. 3A.

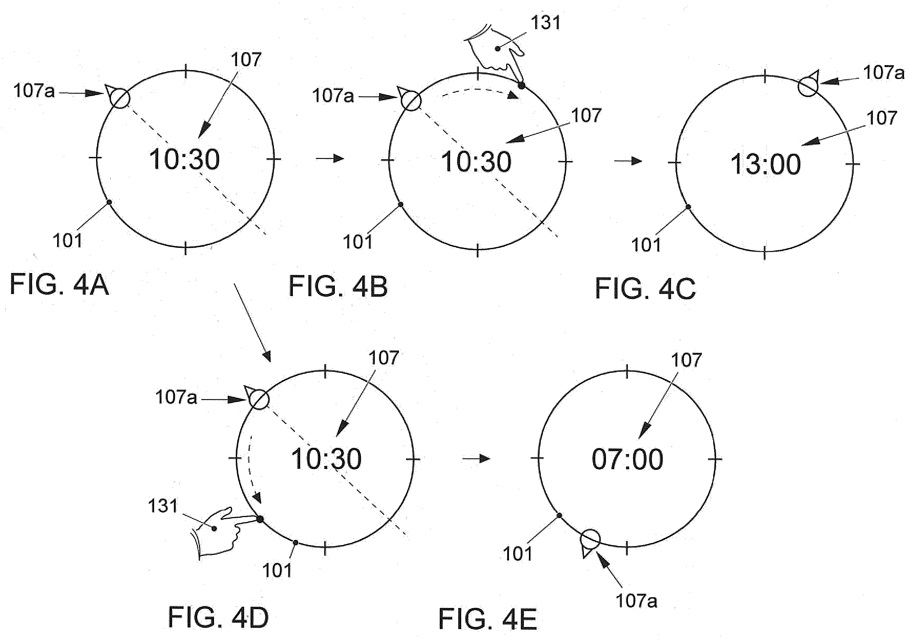

Mit Bezug zu Fig. 4A bis Fig. 4E wird ein Ausführungsbeispiel einer Bedienhandlung zur Veränderung des geplanten Abfahrtszeitpunkt in einer Anzeige nach Art des in Fig. 2 dargestellten Ausführungsbeispiels erläutert.

Alternativ zum Verändern des Abfahrtszeitpunkts 107 durch "Ziehen" des Symbols 107a zur neuen Position, wird die neue Abfahrtszeit im dargestellten Fall durch eine kurze Berührung innerhalb der graphischen Benutzeroberfläche erreicht. Vor der dargestellten Benutzerhandlung ist der Abfahrtszeitpunkt 107 bei 10:30 Uhr eingestellt, wie in Fig. 4A gezeigt. Das Symbol 107a am Rand des Zifferblatts 101 zeigt diese Uhrzeit durch seine Position links oben an.

Wenn der Benutzer mit dem Finger 131 den Rand des Zifferblatts an der 13:00 Uhr entsprechenden Position berührt (Fig. 4B), so entspricht dies gegenüber der ursprünglichen Position einem Winkel von weniger als 180° im Uhrzeigersinn. In diesem Fall wird der Abfahrtszeitpunkt 107 entsprechend zu 13:00 Uhr verändert und die Position des Symbols 107a angepasst (Fig. 4C). Das Symbol 107a erscheint nun also an der Stelle am Rand des Zifferblatts 101, die der Benutzer 131 berührt hat und die Anzeige 107 ist entsprechend angepasst. Obwohl also das ursprünglich in Fig. 4A und Fig. 4B dargestellte Zifferblatt 101 einen Zeitpunkt am Vormittag umfasst, nämlich 10:30 Uhr, wird doch die Benutzerhandlung so interpretiert, dass ein Zeitpunkt am Nachmittag, nämlich 13:00 Uhr und nicht 1:00 Uhr, gemeint ist.

Berührt dagegen der Benutzer mit seinem Finger 131 eine Position links unten auf dem Zifferblatt 101 (Fig. 4D), so entspricht dies gegenüber der ursprünglichen Position einem Winkel von weniger als 180° gegen den Uhrzeigersinn. Hier wird die Abfahrtszeit 107 so verändert, dass sie nunmehr bei 7:00 Uhr liegt und nicht bei 19:00 Uhr.

Dieses Verfahren der Änderung von Zeitdaten erlaubt dem Benutzer die intuitive Eingabe einer neuen Uhrzeit, ohne dass der neue Zeitpunkt unerwartet um zwölf Stunden versetzt ist.

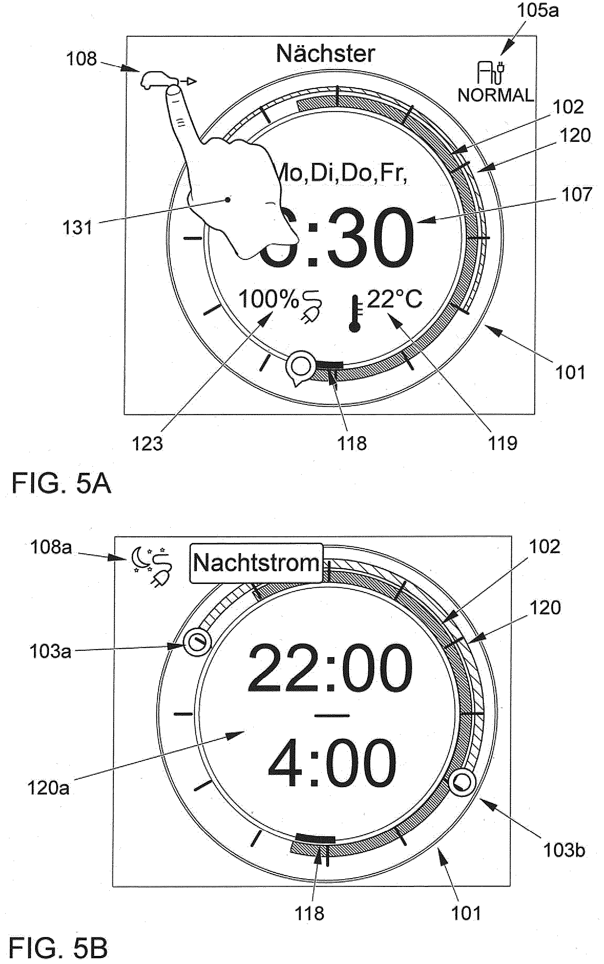

Mit Bezug zu Fig. 5A und Fig. 5B wird ein Ausführungsbeispiel einer Bedienhandlung zur Einstellung eines Nachtstromzeitraums erläutert.

Die in Fig. 5A und Fig. 5B dargestellte Anzeige entspricht im Wesentlichen einem Ausschnitt aus der in Fig. 2 gezeigten. Die Anzeige in Fig. 5A umfasst den Abfahrtszeitraum 107 und ein zugeordnetes Symbol 107a am Rand des Zifferblatts 101, sowie die Zeiträume zum Laden 102 und Klimatisieren 118. Ferner ist ein Nachtstromzeitraum 120 dargestellt. Das Symbol für den Abfahrtsmodus 108 verdeutlicht, dass in dieser Ansicht der graphischen Benutzeroberfläche der geplante Abfahrtszeitpunkt einstellbar ist. Durch eine Berührung des Symbols 108 durch die Hand 131 des Benutzers wird in den Nachtstrommodus108a gewechselt, der in Fig. 5B dargestellt ist.

Das Symbol 108a für den Nachstrommodus wird nun statt des Abfahrtsmodus 108 angezeigt. Die graphischen Objekte, die den Ladezeitraum 102 und den Klimatisierungszeitraum 118 darstellen, sind mit geringerer Helligkeit dargestellt, ferner ist das der Abfahrtszeit 107 zugeordnete Symbol 107a ausgeblendet. Stattdessen werden der Beginn 103a und das Ende 103b des Ladezeitraums mittels graphischer Symbole hervorgehoben und sind nun, etwa analog zu der anhand Fig. 3A und Fig. 3B erläuterten Bedienhandlung veränderbar. Statt der Abfahrtszeitanzeige 107 befindet sich mittig auf dem Zifferblatt 101 die Textanzeige 120a des aktuell angezeigten Nachstromzeitraums 120.

Durch Berühren des Symbols für den Nachtstrommodus 108a wird wieder in den Abfahrtsmodus 108 zurückgewechselt, analog der in Fig. 5A gezeigten Anzeige.

Es sei bemerkt, dass das erfindungsgemäße Verfahren und System nicht auf einen einzelnen Nachtstromzeitraum 120 beschränkt ist. Es können im Gegenteil auch mehrere Zeiträume, etwa zu verschiedenen Wochentagen und Tageszeiten erfasst und berücksichtigt werden. In diesem Fall werden mehrere Kreissegmente angezeigt, die diesen Zeiträumen zugeordnet sind.

Mit Bezug zu Fig. 6A bis Fig. 6D wird ein Ausführungsbeispiel einer Bedienhandlung zur Einstellung des Ladestroms erläutert.

Die in Fig. 6A bis Fig. 6D dargestellte Anzeige entspricht im Wesentlichen der in Fig. 2 gezeigten. Der dargestellte Zeitplan umfasst den Ladezeitraum 102, der Abfahrtszeitpunkt 107 ist durch das Symbol 107a markiert. Der Ladestrom ist in Fig. 6A durch das Symbol 105a als "normal" angezeigt. Fig. 6B zeigt die Berührung des Ladestromsymbols 105a durch den Finger 131 des Benutzers. Dadurch wird zwischen mehreren möglichen Ladestromstärken gewechselt, nämlich 105a (normal), 105b (Wallbox, in Fig. 6C dargestellt) und 105c (CSS, Schnelladen, in Fig. 6D dargestellt). Bei jedem Drücken auf das Ladestromsymbol in der graphischen Benutzeroberfläche wird zum nächsten Ladestrom gewechselt. Entsprechend dem hier eingestellten Ladestrom erzeugt die Recheneinheit 5 einen neuen Zeitplan. Insbesondere ist die Ladedauer bei höherem Ladestrom kürzer, die Ladedauer 102 wird also durch ein kürzeres Kreissegment symbolisch dargestellt. Dies ist in Fig. 6C und Fig. 6D gezeigt. Der Benutzer sieht auf diese Weise schnell und intuitiv verständlich, wie lange das Laden der Batterie 2 dauert, abhängig vom bereitstellbaren Ladestrom.

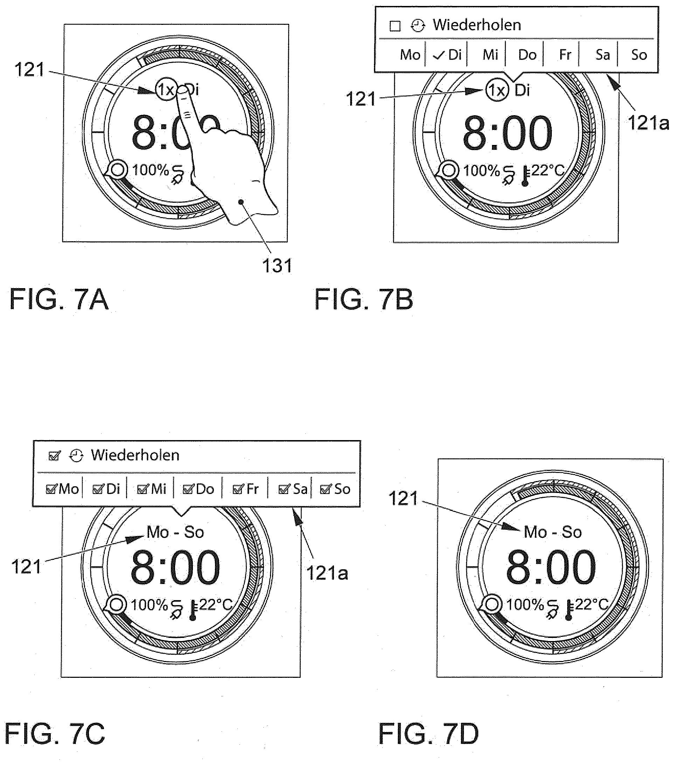

Mit Bezug zu Fig. 7A bis Fig. 7D wird ein Ausführungsbeispiel einer Bedienhandlung zur Einstellung des Wiederholungsintervalls erläutert.

Die in Fig. 7A bis Fig. 7D dargestellte Anzeige entspricht im Wesentlichen der in Fig. 2 gezeigten. Das Wiederholungsintervall 121 wird mittig angezeigt, der Zeitplan in Fig. 7A soll einmalig am Dienstag ausgeführt werden. Durch Berühren der Benutzeroberfläche bei der Anzeige des Wiederholungsintervalls 121 wird das in Fig. 7B dargestellte Wiederholungsmenü 121a eingeblendet. In diesem Wiederholungsmenü 121a können einzelne oder mehrere Wochentage ausgewählt werden, zudem kann bestimmt werden, dass der Zeitplan dauerhaft wiederholt wird. Bei der in Fig. 7B dargestellten Konfiguration ist im Wiederholungsmenü 121a lediglich der Dienstag durch einen Haken markiert, der definierte Zeitplan wird also einmalig am Dienstag durchgeführt. Markiert der Benutzer alle Wochentage und das Feld "Wiederholen", wie in Fig. 7C dargestellt, so wird das Programm an allen Tagen von Montag bis Sonntag regelmäßig ausgeführt. Die entsprechende Anzeige nach Abschluss des Wiederholungsmenüs ist in Fig. 7D gezeigt.

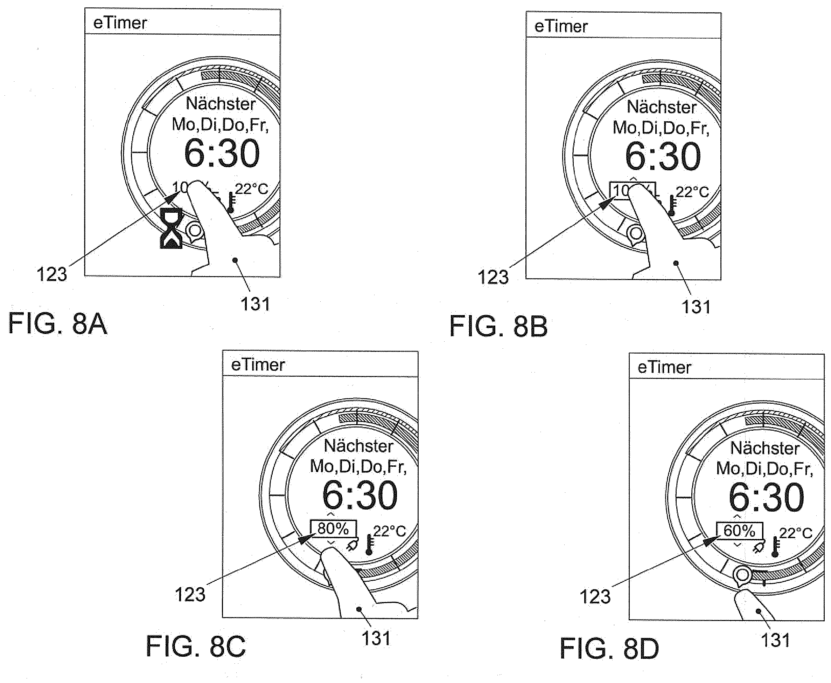

Mit Bezug zu Fig. 8A bis Fig. 8D wird ein Ausführungsbeispiel einer Bedienhandlung zur Einstellung des geplanten Energieinhalts des Energiespeichers 2 erläutert.

Die in Fig. 8A bis Fig. 8D dargestellte Anzeige entspricht im Wesentlichen der in Fig. 7A gezeigten. Der Ziel-Energieinhalt 123 wird als Text angezeigt, in dem in Fig. 8A dargestellten Fall 100% der Kapazität der Batterie 2. Durch längeres Berühren der Benutzeroberfläche bei der Anzeige des Ziel-Energieinhalts 123 durch den Finger 131 des Benutzers - die zur Auslösung benötigte minimale Zeit wird durch die Konfiguration des Systems definiert - wird der Ziel-Energieinhalt 123, wie in Fig. 8B dargestellt, durch einen Rahmen um den angezeigten Zahlenwert als veränderbar markiert. Durch eine nach unten rutschende Bewegung des Fingers 131 wird angezeigte Wert kleiner gewählt, im in Fig. 8C dargestellten Fall 80% des maximalen Energieinhalts der Batterie 2, in Fig. 8D nach weiterem Rutschen nach unten 60%. Umgekehrt wird durch Rutschen nach oben ein höherer Wert von bis zu 100% des maximalen Energieinhalts der Batterie 2angezeigt.

Nach dem Lösen des Fingers 131 von der Oberfläche (nicht dargestellt) wird der Rahmen um den Ziel-Energieinhalt 123 wieder ausgeblendet und das System erzeugt einen neuen Zeitplan sowie eine neue graphische Darstellung. Insbesondere wird die zum Erreichen des Ziel-Energieinhalts benötigte Zeit neu berechnet und die graphische Darstellung entsprechend angepasst.

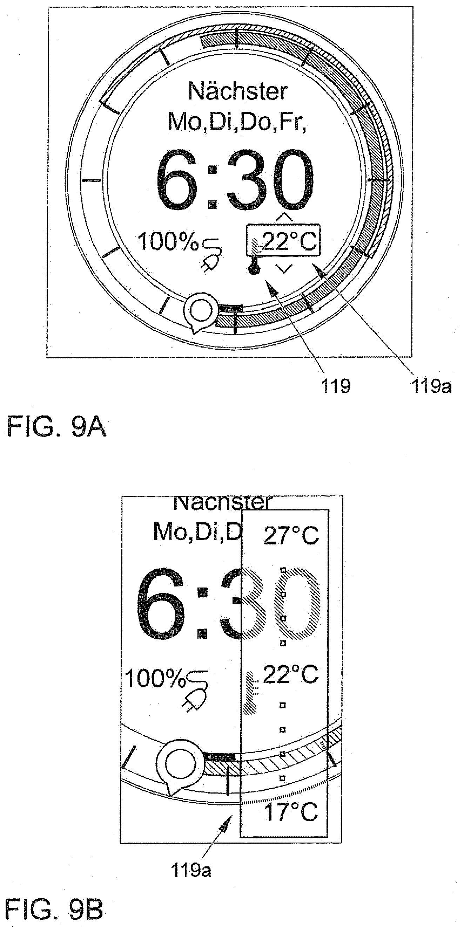

Mit Bezug zu Fig. 9A und Fig. 9B werden zwei Ausführungsbeispiele zur Einstellung der Zieltemperatur erläutert.

Die in Fig. 9A und Fig. 9B dargestellte Anzeige entspricht im Wesentlichen der in Fig. 2 gezeigten. Die Einstellung der gewünschten Zieltemperatur wird analog zur oben beschriebenen Einstellung des geplanten Energieinhalts durchgeführt. Durch längeres Berühren der Benutzeroberfläche bei der Anzeige des Klimatisierungsstatus 119 durch den Finger (nicht dargestellt) des Benutzers - die zur Auslösung benötigte minimale Zeit wird durch die Konfiguration des Systems definiert - wird die Zieltemperatur 119a, wie in Fig. 9A dargestellt, durch einen Rahmen um den angezeigten Zahlenwert als veränderbar markiert. Analog zu dem oben beschriebenen Verfahren zur Einstellung des Ziel-Energieinhalts wird durch Rutschen des Fingers nach oben oder unten ein größerer oder kleinerer Wert eingestellt. In einem weiteren Ausführungsbeispiel, in Fig. 9B dargestellt, ist die Zieltemperatur 119a nicht durch einen Rahmen als veränderbar markiert, sondern wird als Temperaturmenü 119a dargestellt, das die wählbaren Temperaturen anzeigt.

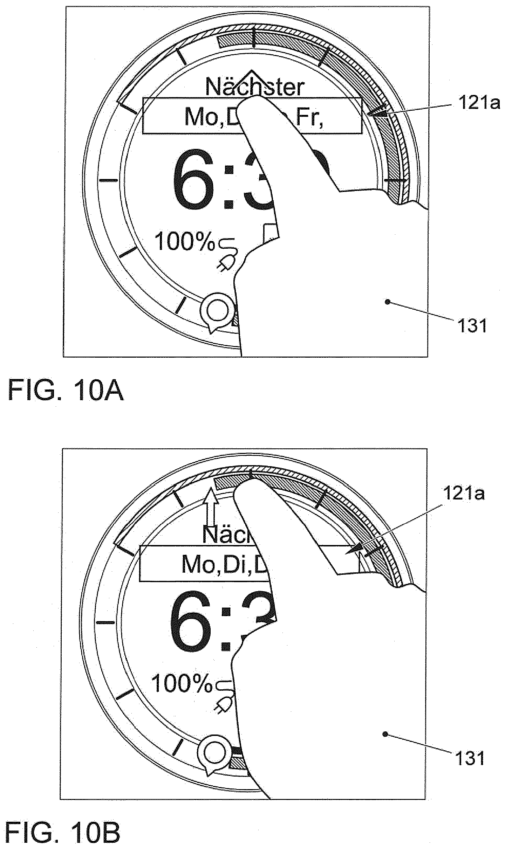

Mit Bezug zu Fig. 10A und Fig. 10B wird ein Ausführungsbeispiel einer Bedienhandlung zur Einstellung des Wiederholungsintervalls erläutert.

Die in Fig. 10A und Fig. 10B dargestellte Anzeige entspricht im Wesentlichen der in Fig. 2 gezeigten. Die Einstellung des gewünschten Wiederholungsintervalls wird hier analog zur oben beschriebenen Einstellung der Zieltemperatur durchgeführt. Durch Berühren der Benutzeroberfläche bei der Anzeige des Wiederholungsintervalls 121, wie sie in Fig. 2 dargestellt ist, durch den Finger 131 des Benutzers wird das Wiederholungsintervall 121a, wie in Fig. 10A dargestellt, durch einen Rahmen um den angezeigten Wert als veränderbar markiert. Analog zu dem oben beschriebenen Verfahren zur Einstellung des Ziel-Energieinhalts wird durch Rutschen des Fingers nach oben oder unten ein anderer Wert aus einer Liste möglicher Wiederholungsintervalle eingestellt. Bei dem dargestellten Beispiel wird durch Rutschen des Fingers 131 nach oben als nächste Option "Werktags" angezeigt. Nimmt der Benutzer den Finger 131 von der Benutzeroberfläche, wird der aktuell markierte Wert übernommen.

In einem weiteren Ausführungsbeispiel (nicht dargestellt) ist das Wiederholungsintervall121a nicht durch einen Rahmen als veränderbar markiert, sondern wird als Wiederholungsmenü dargestellt, das die wählbaren Intervalle anzeigt, analog zu dem Temperaturmenü 119a in Fig. 9B.

### Bezugszeichenliste

- 1: Fahrzeug
- 2: Energiespeicher
- 3: Erfassungseinheit
- 4: Eingabeeinheit
- 5: Recheneinheit
- 6: Steuereinheit
- 7: Anzeigeeinheit
- 8: Ladeeinrichtung
- 9: Klimatisierungseinheit
- 10: Mobile Nutzervorrichtung
- 11: Server
- 101: Zifferblatt
- 101'; 101": Weitere Zifferblätter
- 102: Ladezeitraum
- 103: Ladebeginn
- 103a: Nachtstrombeginn
- 104: Ladeende
- 104a: Nachtstromende
- 105a: Ladestromsymbol "normal"
- 105b: Ladestromsymbol "Wallbox"
- 105c: Ladstromsymbol "schnell"
- 106: Ladedauer "normal"
- 107: Abfahrtszeitpunkt
- 107a: Abfahrtszeitpunkt (Symbol)
- 108: Abfahrtsmodus
- 108a: Nachtstrommodus
- 110: Sofortladeoption
- 112; 113; 114: Programmierte Ladevorgänge
- 112a: Aktivitätsanzeige
- 115: Programmierter Klimatisierungsvorgang
- 118: Klimatisierungszeitraum
- 119: Klimatisierungsstatus
- 119a: Zieltemperatur
- 120: Nachtstromzeitraum
- 120a: Nachtstromzeitraum (Textdarstellung)
- 121: Wiederholungsintervall
- 121a: Wiederholungsmenü
- 129: AM/PM-Anzeige
- 130: Ladetimerstatus
- 131: Hand des Benutzers
- 132: Bewegungspfad

## Patentansprüche

1. Verfahren zur Erfassung von einstellbaren Planungsparametern für die Erzeugung eines Zeitplans zum automatischen Laden eines elektrischen Energiespeichers (2) in einem Fahrzeug (1), bei dem
zumindest zwei Lademodi (110, 111) für den Energiespeicher (2) definiert sind, nämlich ein Sofortlademodus (110), bei dem der Ladevorgang sofort nach dem Verbinden des Energiespeichers (2) mit einer Ladeeinrichtung (8) beginnt, und ein Programmlademodus (111), bei dem der Beginn des Ladevorgangs (103) durch den Zeitplan bestimmt wird,
Daten über den Energieinhalt des Energiespeichers (2) und einen von einer Ladeeinrichtung (8) bereitstellbaren Ladestrom erfasst werden,
Graphikdaten einer graphischen Benutzeroberfläche mit mehreren graphischen Objekten erzeugt und gleichzeitig angezeigt werden, wobei ein erstes graphisches Objekt ein für alle Lademodi (110, 111) des Energiespeichers (2) übergreifendes Graphikelement (101) umfasst, welches eine Zeitskala darstellt und an dem weitere graphische Objekte angeordnet sind, ein zweites graphisches Objekt (102) dem Anfangs- (103) und Endzeitpunkt (104) des geplanten Ladevorgangs zugeordnet sind, und ein drittes graphisches Objekt (105, 105a, 105b, 105c) dem ein Ladestrom zugeordnet ist,
einstellbare Planungsparameter als Benutzereingaben zu dem automatischen Laden des elektrischen Energiespeichers (2) erfasst werden, wobei einstellbare Planungsparameter, die graphischen Objekten zugeordnet sind, durch eine Bedienhandlung mittels der graphischen Benutzeroberfläche direkt verändert werden und
anhand der erfassten Daten und der einstellbaren Planungsparameter der Zeitplan zum automatischen Laden des Energiespeichers (2) erzeugt wird, wobei
ein spätester Verbindungszeitpunkt bestimmt wird, zu dem das Fahrzeug (1) mit einer Ladeeinrichtung (8) verbunden werden muss, um einen Ziel-Energieinhalt (123) bis zum geplanten Endzeitpunkt (104) zu erreichen,
ein Erinnerungszeitpunkt bestimmt wird und
eine Erinnerungsmeldung ausgegeben wird, wenn bei Erreichen des Erinnerungszeitpunkts das Fahrzeug nicht mit einer Ladeeinrichtung (8) verbunden ist.

2. Verfahren nach Anspruch 1,
**dadurch gekennzeichnet, dass**
die Graphikdaten der graphischen Benutzeroberfläche im Programmlademodus ferner zumindest ein graphisches Objekt umfassen, das der Wiederholung des programmierten Zeitplans zugeordnet ist und das durch eine Bedienhandlung mittels der graphischen Benutzeroberfläche direkt bedienbar ist.

3. Verfahren nach einem der vorhergehenden Ansprüche,
**dadurch gekennzeichnet, dass**
das Fahrzeug (1) eine Klimatisierungseinheit (9) umfasst,
die erfassten Planungsparameter ferner Daten über eine geplante Klimatisierung des Fahrzeugs (1) umfassen,
der erzeugte Zeitplan Zeitdaten zur Klimatisierung umfasst und
die Graphikdaten der graphischen Benutzeroberfläche ferner zumindest ein graphisches Objekt umfassen, das den Daten über eine geplante Klimatisierung zugeordnet ist und das durch eine Bedienhandlung mittels der graphischen Benutzeroberfläche direkt bedienbar ist.

4. Verfahren nach einem der vorhergehenden Ansprüche,
**dadurch gekennzeichnet, dass**
die erfassten Planungsparameter Zeitdaten zu Zeiträumen umfassen,
diese Zeiträume bei der Erzeugung des Zeitplans priorisiert werden und
die Graphikdaten der graphischen Benutzeroberfläche ferner zumindest ein graphisches Objekt umfassen, das diesen Zeitdaten zugeordnet ist und das durch eine Bedienhandlung mittels der graphischen Benutzeroberfläche direkt bedienbar ist.

5. Verfahren nach einem der vorhergehenden Ansprüche,
**dadurch gekennzeichnet, dass**
das übergreifende Graphikelement eine Darstellung des Zifferblatts (101) einer Uhr ist, an dem weitere graphische Objekte angeordnet sind, die den Zeitdaten des Zeitplans zugeordnet sind.

6. Verfahren nach Anspruch 5,
**dadurch gekennzeichnet, dass**
durch Auswahl einer Position am Rand des Zifferblatts (101) eine Änderung eines Zeitpunktes erfasst wird, wobei
die neue Uhrzeit vor dem ursprünglichen Zeitpunkt liegt, wenn die ausgewählte Position einer Drehung gegen den Uhrzeigersinn von weniger als 180° auf dem Zifferblatt (101) entspricht, und
nach dem ursprünglichen Zeitpunkt, wenn die ausgewählte Position einer Drehung im Uhrzeigersinn von weniger als 180° auf dem Zifferblatt (101) entspricht.

7. Verfahren nach einem der vorhergehenden Ansprüche,
**dadurch gekennzeichnet, dass**
die Graphikdaten so erzeugt werden, dass sie graphische Objekte umfassen, die mehreren alternativen Zeitplänen zugeordnet sind.

8. System zur Erfassung von einstellbaren Planungsparametern für die Erzeugung eines Zeitplans zum automatischen Laden eines elektrischen Energiespeichers (2) in einem Fahrzeug (1), bei dem
zumindest zwei Lademodi (110, 111) für den Energiespeicher (2) definiert sind, nämlich ein Sofortlademodus (110), bei dem der Ladevorgang sofort nach dem Verbinden des Energiespeichers (2) mit einer Ladeeinrichtung (8) beginnt, und ein Programmlademodus (111), bei dem der Beginn des Ladevorgangs (103) durch den Zeitplan bestimmt wird,
umfassend:
eine Erfassungseinheit (3), durch die Daten über den Energieinhalt des Energiespeichers (2) und einen von der Ladeeinrichtung (8) bereitstellbaren Ladestrom erfassbar sind,
eine Steuereinheit (6), durch die Graphikdaten einer graphischen Benutzeroberfläche mit mehreren graphischen Objekten erzeugbar und mittels einer Anzeigeeinheit (7) gleichzeitig anzeigbar sind,
wobei ein erstes graphisches Objekt ein für alle Lademodi (110, 111) des Energiespeichers (2) übergreifendes Graphikelement (101) umfasst, welches eine Zeitskala darstellt und an dem weitere graphische Objekte angeordnet sind, ein zweites graphisches Objekt (102) dem Anfangs- (103) und Endzeitpunkt (104) des geplanten Ladevorgangs zugeordnet ist, und ein drittes graphisches Objekt (105, 105a, 105b, 105c) dem ein Ladestrom zugeordnet ist,
eine Eingabeeinheit (4), durch die einstellbare Planungsparameter als Benutzereingaben zu dem automatischen Laden des elektrischen Energiespeichers (2) erfassbar sind, wobei einstellbare Planungsparameter, die graphischen Objekten zugeordnet sind, durch eine Bedienhandlung mittels der graphischen Benutzeroberfläche direkt veränderbar sind und
eine Recheneinheit (5), durch die anhand der erfassten Daten und der einstellbaren Planungsparameter der Zeitplan zum automatischen Laden des Energiespeichers (2) erzeugbar ist,
wobei ein spätester Verbindungszeitpunkt bestimmbar ist, zu dem das Fahrzeug (1) mit einer Ladeeinrichtung (8) verbunden werden muss, um einen Ziel-Energieinhalt (123) bis zum geplanten Endzeitpunkt (104) zu erreichen,
ein Erinnerungszeitpunkt bestimmbar ist und
eine Erinnerungsmeldung ausgebbar ist, wenn bei Erreichen des Erinnerungszeitpunkts das Fahrzeug nicht mit einer Ladeeinrichtung (8) verbunden ist.

9. System nach Anspruch 8,
**dadurch gekennzeichnet, dass**
die Eingabeeinheit (4) eine berührungsempfindliche Oberfläche der Anzeigeeinheit (7) umfasst.

10. System nach einem der Ansprüche 8 oder 9,
**dadurch gekennzeichnet, dass**
die Anzeigeeinheit (7) und/oder die Eingabeeinheit (4) eine mobile Nutzervorrichtung (10) umfassen.

## Claims

1. Method for detecting settable scheduling parameters for producing a time schedule for automatically charging an electrical energy store (2) in a vehicle (1), in which
at least two charging modes (110, 111) are defined for the energy store (2), specifically an immediate charging mode (110) in which the charging operation begins immediately following connection of the energy store (2) to a charging device (8), and a programmed charging mode (111) in which the beginning of the charging operation (103) is determined by the time schedule,
data relating to the energy content of the energy store (2) and a charging current that can be provided by a charging device (8) are detected,
graphics data of a graphical user interface having a plurality of graphical objects are produced and simultaneously displayed, wherein a first graphical object comprises a graphical element (101) that is universal for all charging modes (110, 111) of the energy store (2), depicts a time scale, and on which further graphical objects are arranged, a second graphical object (102) is assigned to the start (103) and end time (104) of the scheduled charging operation, and a third graphical object (105, 105a, 105b, 105c) is assigned to the charging current,
settable scheduling parameters are detected as user inputs for automatically charging the electrical energy store (2), wherein settable scheduling parameters that are assigned to graphical objects are changed directly through an operating action by means of the graphical user interface, and
the time schedule for automatically charging the energy store (2) is produced on the basis of the detected data and the settable scheduling parameters, wherein
a latest connection time at which the vehicle (1) has to be connected to a charging device (8) to achieve a target energy content (123) by the scheduled end time (104) is determined,
a reminder time is determined, and
a reminder message is output if the vehicle is not connected to a charging device (8) upon reaching the reminder time.

2. Method according to Claim 1,
**characterized in that**,
in the programmed charging mode, the graphics data of the graphical user interface further comprise at least one graphical object that is assigned to the repetition of the programmed time schedule and can be operated directly through an operating action by means of the graphical user interface.

3. Method according to either of the preceding claims, **characterized in that**
the vehicle (1) comprises an air-conditioning unit (9),
the detected scheduling parameters further comprise data relating to scheduled air-conditioning of the vehicle (1),
the produced time schedule comprises time data for the air-conditioning, and
the graphics data of the graphical user interface further comprise at least one graphical object that is assigned to the data relating to scheduled air-conditioning and can be operated directly through an operating action by means of the graphical user interface.

4. Method according to one of the preceding claims,
**characterized in that**
the detected scheduling parameters comprise time data relating to time periods,
these time periods are prioritized with the production of the time schedule, and
the graphics data of the graphical user interface further comprise at least one graphical object that is assigned to these time data and can be operated directly through an operating action by means of the graphical user interface.

5. Method according to one of the preceding claims,
**characterized in that**
the universal graphical element is a depiction of the dial (101) of a clock on which further graphical objects are arranged that are assigned to the time data of the time schedule.

6. Method according to Claim 5,
**characterized in that**
a change of a time is detected by selecting a position on the edge of the dial (101), wherein
the new clock time is before the original time if the selected position corresponds to an anti-clockwise rotation of less than 180° on the dial (101), and
after the original time if the selected position corresponds to a clockwise rotation of less than 180° on the dial (101).

7. Method according to one of the preceding claims,
**characterized in that**
the graphics data are produced in such a way that they comprise graphical objects that are assigned to a plurality of alternative time schedules.

8. System for detecting settable scheduling parameters for producing a time schedule for automatically charging an electrical energy store (2) in a vehicle (1), in which
at least two charging modes (110, 111) are defined for the energy store (2), specifically an immediate charging mode (110) in which the charging operation begins immediately following connection of the energy store (2) to a charging device (8), and a programmed charging mode (111) in which the beginning of the charging operation (103) is determined by the time schedule,
comprising:
a detection unit (3), by way of which data relating to the energy content of the energy store (2) and a charging current that can be provided by the charging device (8) can be detected,
a control unit (6), by way of which graphics data of a graphical user interface having a plurality of graphical objects can be produced and can be simultaneously displayed by means of a display unit (7),
wherein a first graphical object comprises a graphical element (101) that is universal for all charging modes (110, 111) of the energy store (2), depicts a time scale, and on which further graphical objects are arranged, a second graphical object (102) is assigned to the start (103) and end time (104) of the scheduled charging operation, and a third graphical object (105, 105a, 105b, 105c) is assigned to the charging current,
an input unit (4), by way of which settable scheduling parameters can be detected as user inputs for automatically charging the electrical energy store (2), wherein settable scheduling parameters that are assigned to graphical objects can be changed directly through an operating action by means of the graphical user interface, and
a computing unit (5), by way of which the time schedule for automatically charging the energy store (2) can be produced on the basis of the detected data and the settable scheduling parameters,
wherein a latest connection time at which the vehicle (1) has to be connected to a charging device (8) to achieve a target energy content (123) by the scheduled end time (104) can be determined,
a reminder time can be determined, and
a reminder message can be output if the vehicle is not connected to a charging device (8) upon reaching the reminder time.

9. System according to Claim 8,
**characterized in that**
the input unit (4) comprises a touch-sensitive surface of the display unit (7).

10. System according to either of Claims 8 and 9,
**characterized in that**
the display unit (7) and/or the input unit (4) comprise/comprises a mobile user apparatus (10).

## Revendications

1. Procédé de détection de paramètres de planification réglables pour la génération d'un programme de charge automatique d'un accumulateur d'énergie électrique (2) dans un véhicule (1), dans lequel
au moins deux modes de charge (110, 111) sont définis pour l'accumulateur d'énergie (2), à savoir un mode de charge immédiat (110) dans lequel le processus de charge commence immédiatement après le raccordement de l'accumulateur d'énergie (2) à un dispositif de charge (8), et un mode de charge programmé (111) dans lequel le début du processus de charge (103) est déterminé par le programme,
des données concernant la teneur énergétique de l'accumulateur d'énergie (2) et un courant de charge pouvant être fourni par un dispositif de charge (8) sont détectées,
des données graphiques d'une surface utilisateur graphique avec plusieurs objets graphiques sont générées et affichées en même temps, un premier objet graphique comprenant un élément graphique global (101) pour tous les modes de charge (110, 111) de l'accumulateur d'énergie (2) qui représente une échelle de temps et sur lequel d'autres objets graphiques sont disposés, un deuxième objet graphique (102) étant associé à l'instant de début (103) et à l'instant de fin (104) du processus de charge planifié, et un troisième objet graphique (105, 105a, 105b, 105c) étant associé à un courant de charge,
des paramètres de planification réglables sont détectés sous forme d'entrées utilisateur concernant la charge automatique de l'accumulateur d'énergie électrique (2), des paramètres de planification réglables qui sont associés à des objets graphiques étant directement modifiés par une manipulation au moyen de l'interface utilisateur graphique, et
le programme pour la charge automatique de l'accumulateur d'énergie (2) est généré à l'aide des données détectées et des paramètres de planification réglables, dans lequel
un instant de raccordement limite est déterminé auquel le véhicule (1) doit être raccordé à un dispositif de charge (8) afin d'atteindre une teneur énergétique cible (123) jusqu'à l'instant de fin planifié (104),
un instant de rappel est déterminé, et
un message de rappel est émis si le véhicule n'est pas raccordé à un dispositif de charge (8) lorsque l'instant de rappel du véhicule est atteint.

2. Procédé selon la revendication 1, **caractérisé en ce qu'**en mode de charge programmé, les données graphiques de l'interface utilisateur graphique comprennent en outre au moins un objet graphique qui est associé à la répétition du programme programmé et qui peut être manipulé directement par une manipulation au moyen de l'interface utilisateur graphique.

3. Procédé selon l'une quelconque des revendications précédentes, **caractérisé en ce que**
le véhicule (1) comprend une unité de climatisation (9),
les paramètres de planification détectés comprennent en outre des données concernant une climatisation planifiée du véhicule (1),
le programme généré comprend des données de temps concernant la climatisation, et
les données graphiques de l'interface utilisateur graphique comprennent en outre au moins un objet graphique qui est associé aux données concernant une climatisation planifiée et qui peut être manipulé directement par une manipulation au moyen de l'interface utilisateur graphique.

4. Procédé selon l'une quelconque des revendications précédentes, **caractérisé en ce que**
les paramètres de planification détectés comprennent des données de temps concernant des périodes de temps,
ces périodes de temps sont priorisées lors de la génération du programme, et
les données graphiques de l'interface utilisateur graphique comprennent en outre au moins un objet graphique qui est associé à ces données de temps et qui peut être manipulé directement par une manipulation au moyen de l'interface utilisateur graphique.

5. Procédé selon l'une quelconque des revendications précédentes, **caractérisé en ce que** l'élément graphique global est une représentation d'un cadran (101) d'une horloge sur lequel sont disposés d'autres objets graphiques qui sont associés aux données de temps du programme.

6. Procédé selon la revendication 5, **caractérisé en ce que** la sélection d'une position au bord du cadran (101) permet de détecter une modification d'un instant, dans lequel
la nouvelle heure se trouve avant l'instant d'origine si la position sélectionnée correspond à une rotation dans le sens antihoraire de moins de 180° sur le cadran (101), et
après l'instant d'origine si la position sélectionnée correspond à une rotation dans le sens horaire de moins de 180° sur le cadran (101).

7. Procédé selon l'une quelconque des revendications précédentes, **caractérisé en ce que** les données graphiques sont générées de telle sorte qu'elles comprennent des objets graphiques qui sont associés à plusieurs programmes en variante.

8. Système de détection de paramètres de planification réglables pour la génération d'un programme de charge automatique d'un accumulateur d'énergie électrique (2) dans un véhicule (1), dans lequel
au moins deux modes de charge (110, 111) sont définis pour l'accumulateur d'énergie (2), à savoir un mode de charge immédiat (110) dans lequel le processus de charge commence immédiatement après le raccordement de l'accumulateur d'énergie (2) à un dispositif de charge (8), et un mode de charge programmé (111) dans lequel le début du processus de charge (103) est déterminé par le programme,
comprenant :
une unité de détection (3) qui permet de détecter des données concernant la teneur énergétique de l'accumulateur d'énergie (2) et un courant de charge pouvant être fourni par le dispositif de charge (8),
une unité de commande (6) qui permet de générer des données graphiques d'une interface utilisateur graphique avec plusieurs objets graphiques et de les afficher en même temps au moyen d'une unité d'affichage (7),
un premier objet graphique comprenant un élément graphique global (101) pour tous les modes de charge (110, 111) de l'accumulateur d'énergie (2) qui représente une échelle de temps et sur lequel d'autres objets graphiques sont disposés, un deuxième objet graphique (102) étant associé à l'instant de début (103) et à l'instant de fin (104) du processus de charge planifié, et un troisième objet graphique (105, 105a, 105b, 105c) étant associé à un courant de charge,
une unité d'entrée (4) qui permet de détecter des paramètres de planification réglables sous forme d'entrées utilisateur concernant la charge automatique de l'accumulateur d'énergie électrique (2), des paramètres de planification réglables qui sont associés à des objets graphiques pouvant être modifiés directement par une manipulation au moyen de l'interface utilisateur graphique, et
une unité de calcul (5) qui permet de générer le programme de charge automatique de l'accumulateur d'énergie (2) à l'aide des données détectées et des paramètres de planification réglables,
un instant de raccordement limite pouvant être déterminé auquel le véhicule (1) doit être raccordé à un dispositif de charge (8) afin d'atteindre une teneur énergétique cible (123) jusqu'à l'instant de fin planifié (104),
un instant de rappel peut être déterminé, et
un message de rappel peut être émis si le véhicule n'est pas raccordé à un dispositif de charge (8) lorsque l'instant de rappel du véhicule est atteint.

9. Système selon la revendication 8, **caractérisé en ce que** l'unité d'entrée (4) comprend une surface tactile de l'unité d'affichage (7).

10. Système selon l'une quelconque des revendications 8 ou 9, **caractérisé en ce que** l'unité d'affichage (7) et/ou l'unité d'entrée (4) comprend/comprennent un dispositif utilisateur mobile (10).
